(19) **Europäisches Patentamt / European Patent Office / Office européen des brevets**

(11) **EP 4 708 215 A1**

(12) **EUROPEAN PATENT APPLICATION**
published in accordance with Art. 153(4) EPC

(43) Date of publication:
**11.03.2026  Bulletin 2026/11**

(21) Application number: **24822606.0**

(22) Date of filing: **05.06.2024**

(51) International Patent Classification (IPC):
**G06V 10/26** (2022.01)

(52) Cooperative Patent Classification (CPC):
**G06N 3/045; G06N 3/0455; G06N 3/0464;
G06N 3/08; G06N 3/084; G06V 10/26; G06V 10/30;
G06V 10/40; G06V 10/82; G06V 20/40**

(86) International application number:
**PCT/CN2024/097402**

(87) International publication number:
**WO 2024/255655 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023  CN 202310701005**

(71) Applicant: **Huawei Technologies Co., Ltd.
Shenzhen, Guangdong 518129 (CN)**

(72) Inventors:
• **LI, Fan**
  **Shenzhen, Guangdong 518129 (CN)**
• **LIU, Weiwei**
  **Shenzhen, Guangdong 518129 (CN)**
• **LIU, Yuhao**
  **Shenzhen, Guangdong 518129 (CN)**

(74) Representative: **Gill Jennings & Every LLP
The Broadgate Tower
20 Primrose Street
London EC2A 2ES (GB)**

(54) **IMAGE PROCESSING METHOD, MODEL TRAINING METHOD AND RELATED APPARATUS**

(57)  An image processing method is provided, and is applied to the field of artificial intelligence technologies. In the method, continuously captured images in an image sequence are classified into a reference frame and a non-reference frame. For a non-reference frame in the image sequence, a semantic feature of a reference frame located before the non-reference frame is reused to predict a semantic feature of the non-reference frame, the semantic feature of the non-reference frame is no longer re-extracted, and then an image segmentation result of the non-reference frame is obtained through prediction based on the semantic feature of the non-reference frame. A similarity between the reference frame and the non-reference frame is effectively used in this solution, and a semantic feature extraction process for the non-reference frame is reduced by reusing the semantic feature of the reference frame. Therefore, an amount of computation of an image segmentation process for the non-reference frame can be effectively reduced, and an application scenario of the image processing method can be extended.

[FIG. 6]

Obtain a first image and a second image, where the second image and the first image are located in a same image sequence, and the second image is located after the first image — 601

Process the first image by using a semantic feature extraction network, to obtain a semantic feature of the first image, where the semantic feature of the first image is used to predict an image segmentation result of the first image — 602

Process the semantic feature of the first image and the second image by using a noise reduction network, to obtain a semantic feature of the second image through prediction — 603

Perform semantic segmentation processing on the second semantic feature, to obtain an image segmentation result of the second image — 604

## Description

This application claims priority to Chinese Patent Application No. 202310701005.6, filed with the China National Intellectual Property Administration on June 13, 2023 and entitled "IMAGE PROCESSING METHOD, MODEL TRAINING METHOD, AND RELATED APPARATUS", which is incorporated herein by reference in its entirety.

TECHNICAL FIELD

This application relates to the field of artificial intelligence technologies, and in particular, to an image processing method, a model training method, and a related apparatus.

BACKGROUND

Image segmentation is an important branch of computer vision and is widely used in various industries. Image segmentation is to divide an image into several required image blocks based on an intrinsic feature (for example, a texture, brightness, or a topology structure) of the image. Each image block has a similar feature, and different image blocks have significantly different features. With increasing popularity of deep learning technologies, a method for implementing image segmentation gradually changes from a conventional method to a deep learning-based method.

Currently, in deep learning, a U-shaped network structure (U-NET) is usually used to implement image segmentation. In the U-shaped network structure, a network is actually divided into two parts: an extension path with features in descending order and a contraction path with features in ascending order. On the extension path, layer-by-layer convolution and downsampling are performed on an input image from left to right to obtain global semantic information of each object. On the contraction path, upsampling is performed to restore spatial details of the image, and previous semantic information is concatenated to finally obtain a required image segmentation result.

However, a current deep learning-based image processing method has a large amount of computation. In some scenarios in which segmentation needs to be performed on continuously captured images in real time, for example, in a video call or video conference scenario, it is usually difficult for a device with limited computing resources to continuously perform image segmentation on each captured image. Consequently, application of the image processing method is limited.

SUMMARY

This application provides an image processing method, to effectively reduce an amount of computation in an image segmentation process and extend an application scenario of the image processing method.

A first aspect of this application provides an image processing method, applied to segmentation of images in an image sequence. In the method, a first image and a second image in the image sequence are first obtained. The first image may be a reference frame in the image sequence, the second image may be a non-reference frame in the image sequence, the second image is located after the first image in the image sequence, and the second image and the first image meet a preset similarity requirement. The image sequence includes a plurality of continuously captured images, and may be essentially understood as a video.

Then, the first image is processed by using a semantic feature extraction network, to obtain a semantic feature of the first image. The semantic feature of the first image is essentially an image feature stored in a form of a three-dimensional matrix, and can be used to predict an image segmentation result of the first image.

Next, the semantic feature of the first image and the second image are processed by using a noise reduction network, to obtain a semantic feature of the second image through prediction. The semantic feature of the second image is used to obtain an image segmentation result of the second image. Because a similarity between the second image used as the non-reference frame and the first image used as the reference frame is high, the noise reduction network predicts the semantic feature of the non-reference frame based on the semantic feature of the reference frame and image content of the non-reference frame by reusing the semantic feature of the reference frame, to avoid re-extracting the semantic feature of the non-reference frame.

Finally, semantic segmentation processing may be performed on the semantic feature of the second image, that is, each part of the image is segmented based on semantic information of each part included in the semantic feature of the second image, to obtain the image segmentation result of the second image.

In this solution, when the first image and the second image in the image sequence are obtained, for the second image located after the first image in the image sequence, the semantic feature of the first image is reused to predict the semantic feature of the second image, the semantic feature of the second image is no longer re-extracted, and then the image segmentation result of the second image is obtained through prediction based on the semantic feature of the second image. The similarity between the images in the image sequence is effectively used in this solution, and a semantic feature extraction process for the subsequent image is reduced by reusing the semantic feature of the previous image. Therefore, an amount of computation of an image segmentation process for a part of the images can be effectively reduced, and an application scenario of the image processing method can be extended.

In a possible implementation, a similarity between the first image and the second image is not less than a first threshold. In other words, whether each image in the image sequence is a reference frame or a non-reference frame may be determined based on the similarity between the images, to ensure that the similarity between the reference frame and the non-reference frame is not less than the first threshold. In this way, when it is ensured that there is a high similarity between the first image and the second image, accuracy of the semantic feature that is of the second image and that is obtained through prediction by reusing the semantic feature of the first image can be ensured.

In general, the reference frame and the non-reference frame are determined based on the similarity between the images, so that it can be ensured that there is the high similarity between the non-reference frame and the adjacent reference frame, thereby ensuring accuracy of the semantic feature that is of the non-reference frame and that is obtained through prediction based on the semantic feature of the reference frame.

In a possible implementation, in the image sequence, a quantity of images between the first image and the second image is less than a second threshold. In other words, a plurality of images of a fixed quantity may be used as an interval, and a 1st image in each interval is used as a reference frame, that is, a quantity of non-reference frames between two adjacent reference frames is fixed. In this way, the quantity of images between the first image used as the reference frame and the second image used as the non-reference frame is less than a fixed threshold (namely, the second threshold).

In this solution, the quantity of images between the first image and the second image in the image sequence is limited, so that continuity of the first image and the second image can be ensured, thereby ensuring that the first image and the second image have the high similarity, and ensuring the accuracy of the semantic feature that is of the second image and that is obtained through prediction by reusing the semantic feature of the first image.

In a possible implementation, that the first image is processed by using the semantic feature extraction network may be specifically: Feature extraction processing is performed on the first image for a first quantity of times by using the semantic feature extraction network.

That the semantic feature of the first image and the second image are processed by using the noise reduction network, to obtain the semantic feature of the second image through prediction may specifically include: Feature extraction processing is performed on the second image for a second quantity of times, to obtain an original feature of the second image. The second quantity of times is less than the first quantity of times. For example, the first quantity of times is 5, and the second quantity of times is 4. For example, feature extraction is first performed on the second image once by using a convolutional network, to obtain a feature map whose size is 1/2 that of the second image, and then downsampling is performed on the feature map by using a bilinear interpolation method, to obtain the original feature whose size is the same as that of the semantic feature of the first image. Then, the semantic feature of the first image and the original feature of the second image are processed by using the noise reduction network, to obtain the semantic feature of the second image through prediction.

In this solution, a quantity of times of performing feature extraction processing on the second image is reduced, and then the feature of the second image and the semantic feature of the first image are fused by using the noise reduction network, so that an amount of computation of extracting the semantic feature of the second image can be effectively reduced, and image processing efficiency can be improved.

In a possible implementation, that the semantic feature of the first image and the original feature of the second image are processed by using the noise reduction network, to obtain the semantic feature of the second image through prediction includes: The semantic feature of the first image and the original feature of the second image are concatenated to obtain a concatenated feature; and the concatenated feature is input to the noise reduction network, to obtain the semantic feature of the second image through prediction.

In a possible implementation, after the semantic feature of the first image is obtained, semantic segmentation processing may be performed on the semantic feature of the first image, to obtain the image segmentation result of the first image. The image segmentation result of the first image is obtained through prediction by using a first semantic segmentation network, and the image segmentation result of the second image is obtained through prediction by using a second semantic segmentation network. To be specific, for the reference frame, the semantic feature of the reference frame is processed by using the first semantic segmentation network, to obtain the image segmentation result of the reference frame. For the non-reference frame, the semantic feature of the non-reference frame is processed by using the second semantic segmentation network, to obtain the image segmentation result of the non-reference frame.

In this solution, the semantic feature of the reference frame and the semantic feature of the non-reference frame are separately processed by using different semantic segmentation networks, so that a deviation of the semantic feature that is of the non-reference frame and that is obtained through prediction can be well compensated for, and it is ensured that image segmentation effect is finally implemented based on the semantic feature obtained through prediction.

In a possible implementation, the first semantic segmentation network and the second semantic segmentation network have a same network structure, and the first semantic segmentation network and the second semantic segmentation network have different weight parameters. In other words, during training, training processes for the reference frame and the non-reference frame are separated and independent, and the first semantic segmentation network used to process the reference frame and the second semantic segmentation network used to process the non-reference frame are independently trained, so that it can be effectively ensured that the first semantic segmentation network and the second semantic segmentation network have different weight parameters.

In this solution, the same network structure is used as the first semantic segmentation network and the second semantic segmentation network, and the first semantic segmentation network and the second semantic segmentation network are separately trained, so that the first semantic segmentation network and the second semantic segmentation network have different weight parameters. Precision of performing image segmentation tasks by using the two semantic segmentation networks can be ensured while reducing a network design process by reusing the network structure.

In a possible implementation, the noise reduction network may include a convolutional neural network or an attention network.

In a possible implementation, both the image segmentation result of the first image and the image segmentation result of the second image are portrait segmentation results, and both the image segmentation result of the first image and the image segmentation result of the second image are used to perform background replacement of a portrait.

A second aspect of this application provides a model training method, including: obtaining a semantic feature of a first image and a second image, where the second image and the first image are located in a same image sequence, the second image is located after the first image, the semantic feature of the first image is obtained by processing the first image by using a semantic feature extraction network, the semantic feature of the first image is used to predict an image segmentation result of the first image, and the semantic feature extraction network is a trained network; processing the semantic feature of the first image and the second image by using a noise reduction network, to obtain a semantic feature of the second image through prediction; inputting the second image to the semantic feature extraction network, to obtain a target semantic feature; and updating the noise reduction network based on a loss function value, to obtain an updated noise reduction network, where the loss function value is obtained based on a distance between the semantic feature of the second image and the target semantic feature.

In this solution, the semantic feature extraction network for processing a reference frame is pre-trained. For the noise reduction network used to predict a semantic feature of a non-reference frame, a loss function is constructed by using the semantic feature extracted by using the semantic feature extraction network and the semantic feature obtained through prediction by using the noise reduction network, to train the noise reduction network. Finally, the noise reduction network for reducing an amount of computation of extracting the semantic feature of the non-reference frame by reusing the semantic feature of the reference frame can be obtained.

In a possible implementation, a similarity between the first image and the second image is not less than a first threshold.

In a possible implementation, in the image sequence, a quantity of images between the first image and the second image is less than a second threshold.

In a possible implementation, the method further includes: performing semantic segmentation processing on the semantic feature of the second image by using a semantic segmentation network, to obtain an image segmentation result of the second image; and determining a difference value between the image segmentation result of the second image and a real segmentation result of the second image, where the real segmentation result of the second image is obtained through pre-labeling, for example, manual pre-labeling; and the loss function value is obtained based on the difference value and the distance between the semantic feature of the second image and the target semantic feature.

In this solution, the loss function for training the noise reduction network is constructed from two aspects. In one aspect, the loss function is constructed based on the semantic feature obtained through prediction by using the noise reduction network and the semantic feature actually extracted by using the semantic feature extraction network. In another aspect, the loss function is constructed based on the image segmentation result finally output by the semantic segmentation network and the real segmentation result. In this way, during training of the noise reduction network, the finally obtained image segmentation result can be further considered, to ensure that an accurate image segmentation result can be obtained after model training.

In a possible implementation, the method further includes: updating the semantic segmentation network based on the loss function value, to obtain an updated semantic segmentation network.

In a possible implementation, the semantic feature of the first image is obtained by performing feature extraction processing on the first image for a first quantity of times by using the semantic feature extraction network; and processing the semantic feature of the first image and the second image by using the noise reduction network, to obtain the semantic feature of the second image through prediction includes: performing feature extraction processing on the second image for a second quantity of times, to obtain an original feature of the second image, where the second quantity of times is less than the first quantity of times; and processing the semantic feature of the first image and the original feature of the second image by using the noise reduction network, to obtain the semantic feature of the second image through prediction.

In a possible implementation, processing the semantic feature of the first image and the original feature of the second image by using the noise reduction network, to obtain the semantic feature of the second image through prediction includes: concatenating the semantic feature of the first image and the original feature of the second image to obtain a concatenated feature; and inputting the concatenated feature to the noise reduction network, to obtain the semantic feature of the second image through prediction.

In a possible implementation, the noise reduction network includes a convolutional neural network or an attention network.

In a possible implementation, both the image segmentation result of the first image and the image segmentation result of the second image are portrait segmentation results, and both the image segmentation result of the first image and the image segmentation result of the second image are used to perform background replacement of a portrait.

A third aspect of this application provides an image processing apparatus, including: an obtaining module, configured to obtain a first image and a second image, where the second image and the first image are located in a same image sequence, and the second image is located after the first image; and a processing module, configured to process the first image by using a semantic feature extraction network, to obtain a semantic feature of the first image, where the semantic feature of the first image is used to predict an image segmentation result of the first image, and the semantic feature extraction network is a trained network; the processing module is further configured to process the semantic feature of the first image and the second image by using a noise reduction network, to obtain a semantic feature of the second image through prediction; the processing module is further configured to input the second image to the semantic feature extraction network, to obtain a target semantic feature; and the processing module is further configured to update the noise reduction network based on a loss function value, to obtain an updated noise reduction network, where the loss function value is obtained based on a distance between the semantic feature of the second image and the target semantic feature.

In a possible implementation, a similarity between the first image and the second image is not less than a first threshold.

In a possible implementation, in the image sequence, a quantity of images between the first image and the second image is less than a second threshold.

In a possible implementation, the processing module is specifically configured to: perform feature extraction processing on the first image for a first quantity of times by using the semantic feature extraction network; perform feature extraction processing on the second image for a second quantity of times, to obtain an original feature of the second image, where the second quantity of times is less than the first quantity of times; and process the semantic feature of the first image and the original feature of the second image by using the noise reduction network, to obtain the semantic feature of the second image through prediction.

In a possible implementation, the processing module is specifically configured to: concatenate the semantic feature of the first image and the original feature of the second image to obtain a concatenated feature; and input the concatenated feature to the noise reduction network, to obtain the semantic feature of the second image through prediction.

In a possible implementation, the noise reduction network includes a convolutional neural network or an attention network.

In a possible implementation, the processing module is further configured to: process the semantic feature of the first image by using a first semantic segmentation network, to obtain the image segmentation result of the first image; and process the semantic feature of the second image by using a second semantic segmentation network, to obtain the image segmentation result of the second image, where the first semantic segmentation network and the second semantic segmentation network have a same network structure, and the first semantic segmentation network and the second semantic segmentation network have different weight parameters.

In a possible implementation, both the image segmentation result of the first image and the image segmentation result of the second image are portrait segmentation results, and both the image segmentation result of the first image and the image segmentation result of the second image are used to perform background replacement of a portrait.

A fourth aspect of this application provides a model training apparatus, including: an obtaining module, configured to obtain a semantic feature of a first image and a second image, where the second image and the first image are located in a same image sequence, the second image is located after the first image, the semantic feature of the first image is obtained by processing the first image by using a semantic feature extraction network, the semantic feature of the first image is used to predict an image segmentation result of the first image, and the semantic feature extraction network is a trained network; and a processing module, configured to process the semantic feature of the first image and the second image by using a noise reduction network, to obtain a semantic feature of the second image through prediction, where the processing module is further configured to input the second image to the semantic feature extraction network, to obtain a target semantic feature; and the processing module is further configured to update the noise reduction network based on a loss function value, to obtain an updated noise reduction network, where the loss function value is obtained based on a distance between the semantic feature of the second image and the target semantic feature.

In a possible implementation, a similarity between the first image and the second image is not less than a first threshold.

In a possible implementation, in the image sequence, a quantity of images between the first image and the second image is less than a second threshold.

In a possible implementation, the processing module is further configured to: perform semantic segmentation processing on the semantic feature of the second image by using a semantic segmentation network, to obtain an image segmentation result of the second image; and determine a difference value between the image segmentation result of the second image and a real segmentation result of the second image, where the real segmentation result of the second image is obtained through pre-labeling, and the loss function value is obtained based on the difference value and the distance between the semantic feature of the second image and the target semantic feature.

In a possible implementation, the processing module is further configured to update the semantic segmentation network based on the loss function value, to obtain an updated semantic segmentation network.

In a possible implementation, the semantic feature of the first image is obtained by performing feature extraction processing on the first image for a first quantity of times by using the semantic feature extraction network; and the processing module is specifically configured to: perform feature extraction processing on the second image for a second quantity of times, to obtain an original feature of the second image, where the second quantity of times is less than the first quantity of times; and process the semantic feature of the first image and the original feature of the second image by using the noise reduction network, to obtain the semantic feature of the second image through prediction.

In a possible implementation, the processing module is specifically configured to: concatenate the semantic feature of the first image and the original feature of the second image to obtain a concatenated feature; and input the concatenated feature to the noise reduction network, to obtain the semantic feature of the second image through prediction.

In a possible implementation, the noise reduction network includes a convolutional neural network or an attention network.

In a possible implementation, both the image segmentation result of the first image and the image segmentation result of the second image are portrait segmentation results, and both the image segmentation result of the first image and the image segmentation result of the second image are used to perform background replacement of a portrait.

A fifth aspect of this application provides an image processing apparatus. The image processing apparatus includes a memory and a processor. The memory stores code, the processor is configured to execute the code, and when the code is executed, the image processing apparatus performs the method according to any implementation of the first aspect.

A sixth aspect of this application provides a model training apparatus. The model training apparatus includes a memory and a processor. The memory stores code, the processor is configured to execute the code, and when the code is executed, the model training apparatus performs the method according to any implementation of the second aspect.

A seventh aspect of this application provides a computer-readable storage medium. The computer-readable storage medium stores a computer program. When the computer program is run on a computer, the computer is enabled to perform the method according to any implementation of the first aspect or the second aspect.

An eighth aspect of this application provides a computer program product. When the computer program product runs on a computer, the computer is enabled to perform the method according to any implementation of the first aspect or the second aspect.

A ninth aspect of this application provides a chip, including one or more processors. A part or all of the processors are configured to read and execute a computer program stored in a memory, to perform the method according to any implementation of the first aspect or the second aspect.

Optionally, the chip includes a memory, and the memory is connected to the processor through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface. The method provided in this application may be implemented by one chip, or may be cooperatively implemented by a plurality of chips.

For technical effect brought by any design manner of the second aspect to the ninth aspect, refer to technical effect brought by different implementations of the first aspect. Details are not described herein again.

BRIEF DESCRIPTION OF DRAWINGS

FIG. 1 is a diagram of a structure of a convolutional neural network according to an embodiment of this application;
FIG. 2 is a diagram of a structure of another convolutional neural network according to an embodiment of this application;

FIG. 3 is a diagram of implementing image segmentation by using a U-shaped network structure according to an embodiment of this application;

FIG. 4 is a diagram of a system architecture 400 according to an embodiment of this application;

FIG. 5 is a diagram of a structure of an electronic device 101 according to an embodiment of this application;

FIG. 6 is a schematic flowchart of an image processing method according to an embodiment of this application;

FIG. 7 is a schematic flowchart of performing image segmentation on images captured in real time according to an embodiment of this application;

FIG. 8 is a diagram of processing a reference frame and a non-reference frame by using different networks according to an embodiment of this application;

FIG. 9 is a schematic flowchart of a model training method according to an embodiment of this application;

FIG. 10 is a diagram of a system architecture for performing an image processing method according to an embodiment of this application;

FIG. 11 is a diagram of performing portrait segmentation processing on a reference frame and a non-reference frame according to an embodiment of this application;

FIG. 12 is a diagram of performing portrait segmentation processing on a reference frame according to an embodiment of this application;

FIG. 13 is a schematic flowchart of processing a non-reference frame according to an embodiment of this application;

FIG. 14 is a diagram of comparison of processing a reference frame and a non-reference frame according to an embodiment of this application;

FIG. 15 is a diagram of a structure of an image processing apparatus according to an embodiment of this application;

FIG. 16 is a diagram of a structure of a model training apparatus according to an embodiment of this application;

FIG. 17 is a diagram of a structure of an execution device according to an embodiment of this application;

FIG. 18 is a diagram of a structure of a chip according to an embodiment of this application; and

FIG. 19 is a diagram of a structure of a computer-readable storage medium according to an embodiment of this application.

## DESCRIPTION OF EMBODIMENTS

To make objectives, technical solutions, and advantages of this application clearer, the following describes embodiments of this application with reference to accompanying drawings. It is clear that the described embodiments are only a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the descriptions termed in such a way are interchangeable in proper circumstances, so that embodiments can be implemented in orders other than the order illustrated or described in this application. In addition, terms "include", "have", and any other variants are intended to cover non-exclusive inclusion. For example, a process, method, system, product, or device that includes a list of steps or modules is not necessarily limited to those expressly listed steps or modules, but may include other steps or modules not expressly listed or inherent to such a process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effect can be achieved. Unit division in this application is logical division and may be other division during actual implementation. For example, a plurality of units may be combined or integrated into another system, or some features may be ignored or not performed. In addition, displayed or discussed mutual couplings or direct couplings or communication connections may be implemented through some interfaces. Indirect couplings or communication connections between the units may be implemented in electronic or other similar forms. This is not limited in this application. In addition, units or subunits described as separate components may or may not be physically separated, may or may not be physical units, or may be distributed in a plurality of circuit units. A part or all of the units may be selected based on actual requirements to achieve the objectives of the solutions of this application.

For ease of understanding, the following first describes some technical terms used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^T x\right) = f\left(\sum\nolimits_{s=1}^{n} W_s x_s + b\right);$$

Herein, s=1, 2, ..., n, n is a natural number greater than 1, Ws is a weight of xs, and b is a bias of the neuron. f is an activation function (activation functions) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Usually, the first layer is the input layer, the last layer is the output layer, and the middle layer is the hidden layer. Layers are fully connected. To be specific, any neuron at an i$^{th}$ layer is necessarily connected to any neuron at an (i+1)$^{th}$ layer. Although the DNN seems complex, an operation at each layer is not complex, and is simply expressed by the following linear relationship expression: $\vec{y} = \alpha(W\vec{x} + \vec{b})$, where $\vec{x}$ is an input vector, $\vec{y}$ is an output vector, b is an offset vector, W is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients W and offset vectors b. These parameters are defined in the DNN as follows: The coefficient W is used as an example. It is assumed that in a three-layer DNN, a linear coefficient from a fourth neuron at a second layer to a second neuron at a third layer is defined as $w_{24}^{3}$. A superscript 3 indicates a layer at which the coefficient W is located, and a subscript corresponds to an output third-layer index 2 and an input second-layer index 4. In conclusion, a coefficient from a k$^{th}$ neuron at an (L-1)$^{th}$ layer to a j$^{th}$ neuron at an L$^{th}$ layer is defined as $W_{jk}^{L}$. It should be noted that there is no parameter W at the input layer. In the deep neural network, more hidden layers make the network more capable of describing a complex case in the real world. Theoretically, a prediction model with more parameters has higher complexity and a larger "capacity", which indicates that the model can complete a more complex learning task. Training the deep neural network is a process of learning a weight matrix, and a final objective of the training is to obtain a weight matrix of all layers of a trained deep neural network (a weight matrix including vectors W at many layers).

(3) Convolutional neural network (Convolutional Neural Network, CNN)

The convolutional neural network is a deep neural network of a convolutional structure. The convolutional neural network includes a feature extractor including a convolutional layer and a sampling sub-layer. The feature extractor may be considered as a filter. A convolution process may be considered as performing convolution by using a trainable filter and an input image or a feature map (feature map). The convolutional layer is a neuron layer (for example, a first convolutional layer and a second convolutional layer in this embodiment) that performs convolution processing on an input signal in the convolutional neural network. At the convolutional layer of the convolutional neural network, one neuron may be connected to only a part of adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, image information obtained through same learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

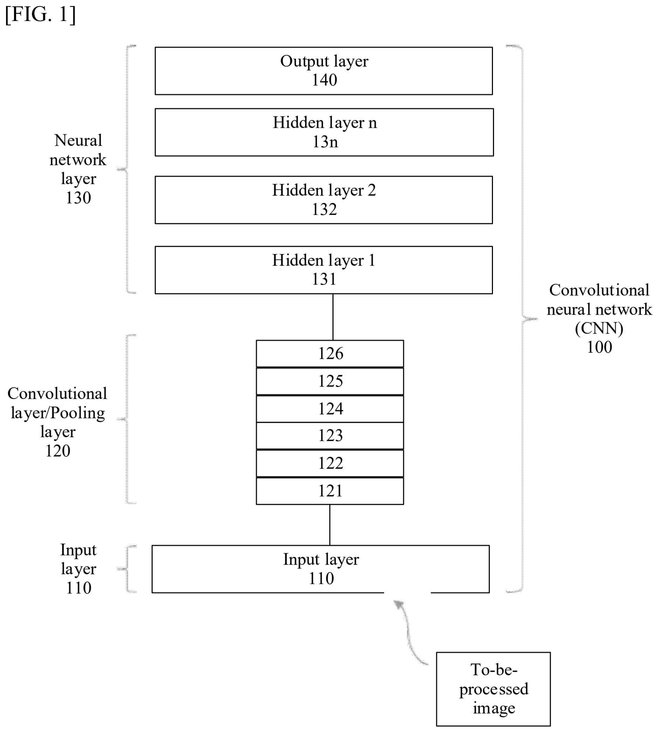

Specifically, as shown in FIG. 1, a convolutional neural network 100 may include an input layer 110, a convolutional layer/pooling layer 120, and a neural network layer 130. The pooling layer is optional.

A structure including the convolutional layer/pooling layer 120 and the neural network layer 130 may be a first convolutional layer and a second convolutional layer described in this application. The input layer 110 is connected to the convolutional layer/pooling layer 120, the convolutional layer/pooling layer 120 is connected to the neural network layer 130, an output of the neural network layer 130 may be an input to an activation layer, and the activation layer may perform non-linear processing on the output of the neural network layer 130.

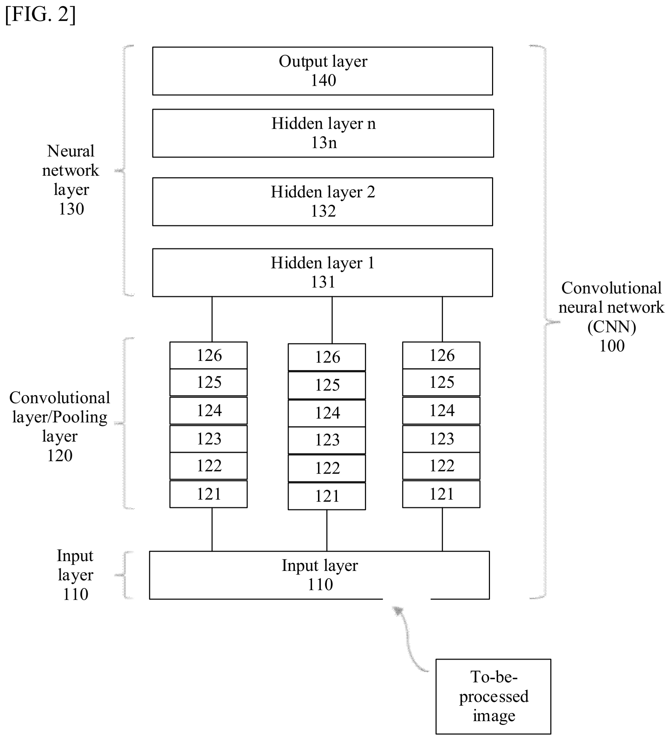

Convolutional layer/Pooling layer 120: Convolutional layer: As shown in FIG. 2, the convolutional layer/pooling layer 120 may include layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. In other words, an output of a convolutional layer may be used as an input of a subsequent pooling layer, or may be used as an input of another convolutional layer to continue a convolution operation.

The convolutional layer 121 is used as an example. The convolutional layer 121 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity level of one pixel (or two pixels, which depends on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. In a process of performing a convolution operation, the weight matrix extends to an entire depth of the input image. Therefore, a convolution output of a single depth dimension is generated by performing convolution with a single weight matrix. However, in most cases, a plurality of weight matrices of a same dimension rather than a single weight matrix are applied. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form an output of the convolution operation.

Weight values in these weight matrices need to be obtained in actual application through massive training. The weight matrices that are formed based on the weight values obtained through training may be used to extract information from the input image, to help the convolutional neural network 100 perform correct prediction.

When the convolutional neural network 100 has a plurality of convolutional layers, a large quantity of general features are usually extracted at an initial convolutional layer (for example, 121). The general feature may also be referred to as a low-level feature. As a depth of the convolutional neural network 100 increases, a feature extracted at a later convolutional layer (for example, 126) is more complex, for example, a higher-level semantic feature. A higher semantic feature is more applicable to a to-be-resolved problem.

Pooling layer: Because a quantity of training parameters usually needs to be reduced, a pooling layer usually needs to be periodically introduced after a convolutional layer, namely, the layers 121 to 126 shown in 120 in FIG. 1. One convolutional layer may be followed by one pooling layer, or a plurality of convolutional layers may be followed by one or more pooling layers.

Neural network layer 130: After processing performed at the convolutional layer/pooling layer 120, the convolutional neural network 100 is not ready to output required output information. As described above, at the convolutional layer/pooling layer 120, only a feature is extracted, and parameters resulting from an input image are reduced. However, to generate final output information (required type information or other related information), the convolutional neural network 100 needs to use the neural network layer 130 to generate an output of one required type or a group of required types. Therefore, the neural network layer 130 may include a plurality of hidden layers (131, 132, ..., and 13n shown in FIG. 1) and an output layer 140. Parameters included in the plurality of hidden layers may be obtained through pre-training based on related training data of a specific task type. For example, the task type may include image recognition, image classification, super-resolution image reconstruction, text classification, voice classification, and the like.

The plurality of hidden layers in the neural network layer 130 are followed by the output layer 140, namely, the last layer of the entire convolutional neural network 100. The output layer 140 has a loss function value similar to classification cross entropy, and the loss function value is specifically used to calculate a prediction error. Once forward propagation (for example, propagation from the layer 110 to the layer 140 in FIG. 2 is forward propagation) of the entire convolutional neural network 100 is completed, back propagation (for example, propagation from the layer 140 to the layer 110 in FIG. 2 is back propagation) is started to update weight values and deviations of the layers mentioned above, to reduce a loss of the convolutional neural network 100 and an error between a result output by the convolutional neural network 100 through the output layer and an ideal result.

It should be noted that the convolutional neural network 100 shown in FIG. 1 is merely used as an example of a convolutional neural network. In specific application, the convolutional neural network may alternatively exist in a form of another network prediction model, for example, a model in which a plurality of convolutional layers/pooling layers are parallel as shown in FIG. 2, and extracted features are all input to the neural network layer 130 for processing.

Usually, the convolution processing may be indicated by Conv.

(4) Residual network (Residual Network, ResNet)

The residual network is an improved convolutional neural network, is characterized by easy optimization, and can improve accuracy by increasing a considerable depth. A residual block inside the residual network uses a skip connection. This alleviates a gradient disappearance problem caused by a depth increase in a deep neural network.

(5) Encoder

In embodiments of this application, the encoder is essentially a neural network model, and can convert data such as text or an image into a vector in encoding space (that is, convert the text or the image into a text feature or an image feature). In an encoder-decoder structure, the encoder actually performs feature extraction on an input data to obtain a feature of the input data.

(6) Decoder

In embodiments of this application, the decoder is essentially also a neural network model, and can convert a feature output by the encoder into an output. For example, in an image segmentation task, the encoder performs feature extraction on an input image to obtain an image feature, and the decoder processes the image feature to obtain an image segmentation result.

(7) Attention network

The attention network is a network model that uses an attention mechanism to improve a model training speed. Currently, a typical attention network includes a transformer network. The model to which the attention mechanism is applied can assign different weights to parts of an input sequence, so that more important feature information is extracted from the input sequence, and the model finally obtains a more accurate output.

In deep learning, the attention mechanism may be implemented by using a weight vector that describes importance. When an element is predicted or inferred, an association between the element and another element is determined based on the weight vector. For example, for a pixel in an image or a word in a sentence, a correlation between a target element and another element may be quantitatively estimated based on an attention vector, and a weighted sum of the attention vector is used as an approximate value of a target value.

The attention mechanism in deep learning simulates an attention mechanism of a human brain. For example, when a man views a picture, although the human eyes can see the whole picture, when the man observes the picture in depth, the eyes focus only on a part of the picture, and at this time, the human brain focuses on this small pattern. In other words, when the man observes a picture carefully, attention of the human brain to the entire picture is not balanced, and is distinguished by a specific weight. This is a core idea of the attention mechanism.

Simply, a human visual processing system usually selectively focuses on some parts of a picture and ignores other irrelevant information, thereby facilitating perception of the human brain. Similarly, in the attention mechanism of deep learning, some parts of an input may be more relevant than others in some issues involving language, speech, or vision. Therefore, the attention mechanism in the attention model can enable the attention model to perform different processing on different parts of input data, so that the attention model dynamically focuses only on data related to a task.

(8) Loss function

In a process of training a neural network, it is expected that an output of the neural network is as close as possible to a value that is truly expected to be predicted. Therefore, a predicted value of a current network and a target value that is truly expected may be compared, and then a weight vector at each layer of the neural network may be updated based on a difference between the predicted value of the current network and the target value that is truly expected (certainly, an initialization process is usually performed before first update, that is, a parameter is preconfigured at each layer of the neural network). For example, if a predicted value of the network is high, the weight vector is adjusted to decrease the predicted value, and adjustment is continuously performed, until the neural network can predict a target value that is truly expected or a value that is quite close to the truly expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value of the loss function (loss) (namely, a loss function value) indicates a larger difference. Therefore, training of the neural network is a process of minimizing the loss function value as much as possible.

(9) Back propagation algorithm

In the neural network, an error back propagation (back propagation, BP) algorithm may be used to correct a value of a parameter in an initial prediction model in a training process, so that an error loss of the prediction model becomes increasingly small. Specifically, an input signal is transferred forward until an error loss occurs in an output, and the parameter in the initial prediction model is updated based on back propagation error loss information, so that the error loss converges. The back propagation algorithm is an error-loss-centered back propagation motion, and is intended to obtain an optimal prediction model parameter, for example, a weight matrix.

(10) Gradient descent (Gradient descent) method

The gradient descent method is a first-order optimization algorithm, and is often used in machine learning to recursively approach a minimum deviation prediction model. To find a local minimum value of a function by using the gradient descent method, iterative search needs to be performed on a specified step distance point in an opposite direction of a gradient (or an approximate gradient) of the function based on a current point. The gradient descent method is one of the most commonly used methods for solving a prediction model parameter of a machine learning algorithm, namely, an unconstrained optimization problem.

Specifically, when a minimum value of a loss function is solved, the gradient descent method may be used to perform iterative solving step by step, to obtain a minimum loss function value and a prediction model parameter value. Conversely, if a maximum value of a loss function needs to be solved, a gradient rise method needs to be used for iteration.

(11) Reference frame

Usually, a frame is used to describe video information, and a reference frame in the frame is a frame that can best represent the video information. The so-called reference frame is a frame in which an object in a scene undergoes non-normal motion, and a scene of another frame between non-normal frames remains normal. The scene is a set of several shots that are related to content.

Simply, when observing the objective world, people are most interested in non-normal events and obtain a large amount of information from non-normal changes. For an object, a non-normal state means that a motion state of the object changes significantly, for example, from static to moving, from moving to static, a motion direction of the object changes, or a motion speed of the object changes significantly. Similarly, when watching a video scene, people focus on a change of the scene, and the change of the video scene reflects a significant change of a motion status of an object in the scene. The scene change further includes scene switching. It may be considered that scene switching is that an object in an original scene suddenly moves to a place at an infinite distance, and an object in a new scene moves from a place at an infinite distance, that is, a motion status of the object changes sharply.

(12) Normalized exponential function (Softmax function)

The softmax function is generalization of logical functions. The softmax function can compress a K-dimensional vector z including any real number into another K-dimensional real vector $\sigma$ (z), so that a range of each element is between (0, 1), and a sum of all elements is 1.

(13) Batch normalization (BN)

The batch normalization is a method for simplifying computation in which an expression with a dimension is transformed into a dimensionless expression and becomes a scalar. Simply, the batch normalization is a dimensionless processing method, which changes an absolute value of a physical system value into a relative value relationship.

(14) Linear rectification function (Linear rectification function, ReLU)

The linear rectification function is also referred to as a rectified linear unit, is an activation function commonly used in an artificial neural network, and is usually a nonlinear function represented by a ramp function and a variant of the ramp function.

(15) Squeeze-and-Excitation (Squeeze-and-Excitation, SE) module

Usually, the SE module includes two parts: a squeeze (Squeeze) part and an excitation (Excitation) part. For the squeeze part, a dimension of an original feature map is H*W*C, and the squeeze part is responsible for squeezing H*W*C into 1*1*C, which means to squeeze H and W into one dimension. In this way, the one-dimensional parameter obtains a previous H*W global field of view, and a perception area is wider.

For the excitation part, after a feature whose size is 1*1*C and that is output by the squeeze part is obtained, a fully connected (Fully Connected) layer is added, to predict importance of each channel, and after importance of different channels is obtained, the importance is excited (excited) to a corresponding channel of the previous original feature map, to perform a subsequent operation.

In general, the SE module essentially calculates a similarity in the channel dimension to enhance information exchange between the plurality of channels.

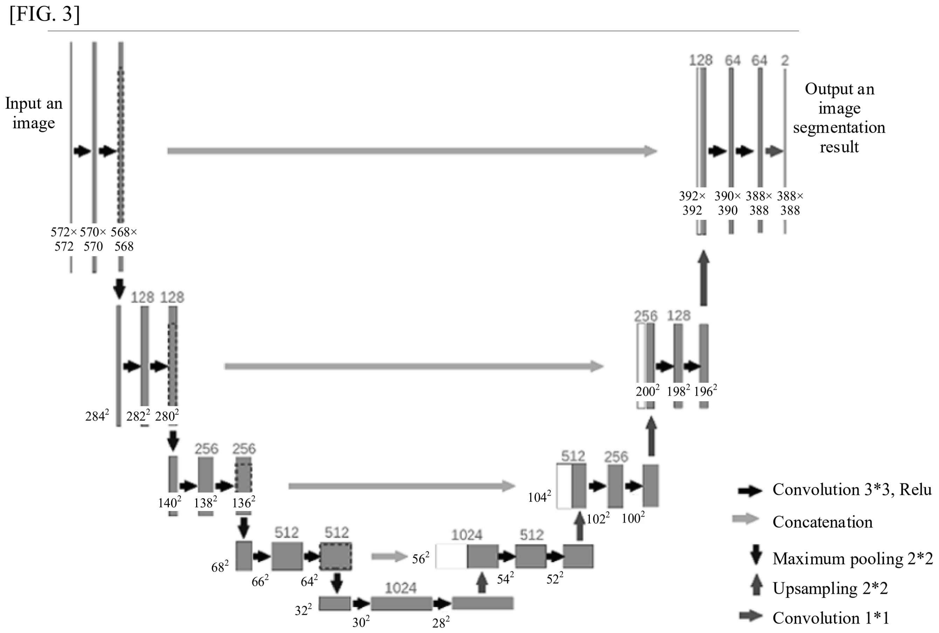

In deep learning, a U-shaped network structure (U-NET) is usually used to implement image segmentation. FIG. 3 is a diagram of implementing image segmentation by using a U-shaped network structure according to an embodiment of this application. As shown in FIG. 3, in the U-shaped network structure, a network is actually divided into two parts: an extension path with features in descending order and a contraction path with features in ascending order. On the extension path, layer-by-layer convolution and downsampling are performed on an input image from left to right to obtain global semantic information of each object. On the contraction path, upsampling is performed to restore spatial details of the image, and previous semantic information is concatenated to finally obtain a required image segmentation result.

In a process of predicting the image segmentation result through upsampling, an image feature obtained through downsampling is concatenated each time. As a result, an amount of computation of a framework of such a U-shaped network structure is huge. Consequently, in some scenarios in which segmentation needs to be performed on continuously captured images in real time, for example, in a video call or video conference scenario, it is usually difficult for a device with limited computing resources to continuously perform image segmentation on each captured image. Consequently, application of the image processing method is limited.

In view of this, embodiments of this application provide an image processing method in which continuously captured images in an image sequence are classified into a reference frame and a non-reference frame. For a non-reference frame in the image sequence, a semantic feature of a reference frame located before the non-reference frame is reused to predict a semantic feature of the non-reference frame, the semantic feature of the non-reference frame is no longer re-extracted, and then an image segmentation result of the non-reference frame is obtained through prediction based on the semantic feature of the non-reference frame. A similarity between the reference frame and the non-reference frame is effectively used in this solution, and a semantic feature extraction process for the non-reference frame is reduced by reusing the semantic feature of the reference frame. Therefore, an amount of computation of an image segmentation process for the non-reference frame can be effectively reduced, and an application scenario of the image processing method can be extended.

For ease of understanding, the following describes a scenario and a system architecture to which the image processing method provided in embodiments of this application is applied.

In a possible implementation, the image processing method provided in embodiments of this application may be applied to a video call scenario, a video conference scenario, or a video live streaming scenario. In the video call scenario, the video conference scenario, or the video live streaming scenario, a user usually captures a video of the user by using a terminal device like a smartphone, a tablet computer, a notebook computer, or a personal computer, and sends the video to another user. In addition, in these scenarios, the user may need the terminal device to distinguish a portrait of the user from a background, to perform specific processing on the portrait or the background, for example, perform beautification processing on the portrait or replace the background. In this way, after capturing the video, the terminal device may perform image segmentation on an image in the video by using the image processing method provided in embodiments of this application, to determine a portrait and a background in the image, and then perform specific processing on the portrait or the background.

In another possible implementation, the image processing method provided in embodiments of this application may be applied to an autonomous driving scenario. In the autonomous driving scenario, an autonomous driving vehicle captures images on a road in real time in a traveling process, and recognizes objects in the captured images, to determine a traveling strategy of the autonomous driving vehicle. In this case, the autonomous driving vehicle may perform, by using the image processing method provided in embodiments of this application, image segmentation on the images captured in real time, to obtain an image segmentation result corresponding to each image, so that the autonomous driving vehicle determines a subsequent traveling strategy based on the image segmentation result.

In still another possible implementation, the image processing method provided in embodiments of this application may be applied to the security field or traffic safety. In the security field, a security camera usually captures images in a specific area in real time, and recognizes objects or pedestrians in the captured images, to ensure whether the specific area is secure. Similarly, in the field of traffic safety, a traffic camera usually captures images on a traffic road in real time, and recognizes vehicles or pedestrians in the captured images, to determine whether the vehicle or the pedestrian complies with a traffic rule. Based on this, the security camera or the traffic camera may perform, by using the image processing method provided in this embodiment of this application, image segmentation on the images captured in real time, to obtain an image segmentation result corresponding to each image, so as to determine whether the security protection area is secure or determine whether the vehicle or the pedestrian complies with the traffic rule.

In yet another possible implementation, the image processing method provided in embodiments of this application may be further applied to the smart home field. In the smart home field, some smart home appliances (for example, a smart television, a robotic vacuum cleaner, a camera, or a smart speaker) usually capture images in a home of a user in real time, and need to perform image segmentation on the captured image, to continue to perform a next task based on an image segmentation result. For example, the robotic vacuum cleaner may determine, based on an image segmentation result, a cleanable area and an area in which an obstacle needs to be avoided; the smart television may determine, based on an image segmentation result, whether to turn on or turn off; and the smart speaker may adjust volume in each direction based on an image segmentation result. Therefore, the smart home appliance in the smart home field may also perform image segmentation on the captured image by using the image processing method provided in embodiments of this application, to perform the next task based on the obtained image segmentation result.

In general, the image processing method provided in embodiments of this application may be applied to a scenario in which image segmentation needs to be performed on continuously captured images, and is not limited to the foregoing example scenarios.

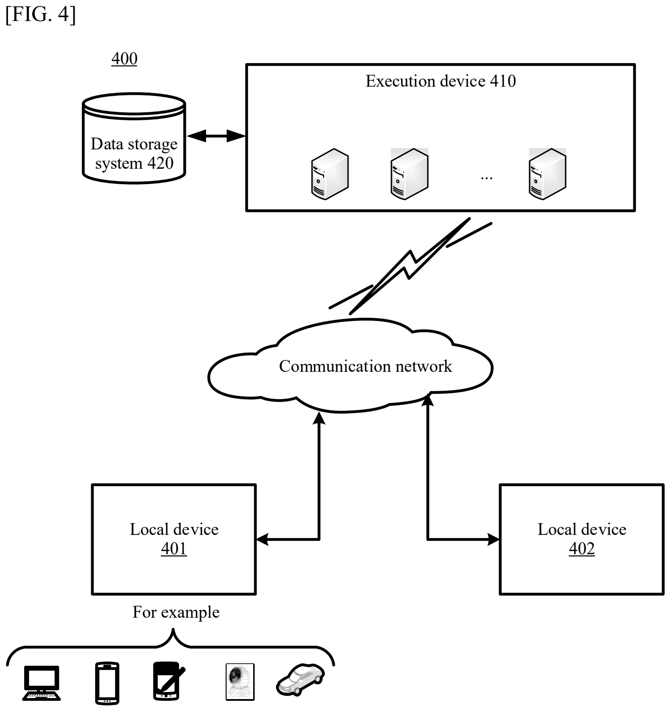

FIG. 4 is a diagram of a system architecture 400 according to an embodiment of this application. As shown in FIG. 4, in the system architecture 400, an execution device 410 may be implemented by one or more servers, and optionally cooperates with another computing device, for example, a data storage device, a router, or a load balancer. The execution device 410 may be disposed on one physical site, or distributed on a plurality of physical sites. The execution device 410 may implement a classification model training method provided in embodiments of this application by using data in a data storage system 420 or by invoking program code in a data storage system 420, to obtain a model.

Users may operate respective user devices (such as a local device 401 and a local device 402) to interact with the execution device 410. Each local device may represent any computing device, for example, a personal computer, a computer workstation, a smartphone, a tablet computer, an intelligent camera, an intelligent vehicle, another type of cellular phone, a media consumption device, a wearable device, a set-top box, or a game console.

A local device of each user may interact with the execution device 410 over a communication network of any communication mechanism/communication standard. The communication network may be a wide area network, a local area network, a point-to-point connection, or any combination thereof.

In an implementation, the execution device 410 is configured to: implement the classification model training method provided in embodiments of this application, and send the obtained model to the local device 401 and the local device 402 over the communication network, so that the local device 401 and the local device 402 can deploy and run the model, to implement the image processing method provided in embodiments of this application.

In another implementation, one or more aspects of the execution device 410 may be implemented by each local device. For example, the local device 401 may provide local data for or feed back a computation result to the execution device 410, or perform the image processing method and the model training method provided in embodiments of this application.

It should be noted that all functions of the execution device 410 may also be implemented by the local device. For example, the local device 401 implements a function of the execution device 410 and provides a service for a user of the local device 401, or provides a service for a user of the local device 402.

In general, the image processing method and the model training method provided in embodiments of this application may be applied to an electronic device, for example, the execution device 410, the local device 401, or the local device 402. For example, the electronic device may be a device like a server, a wireless electronic device in industrial control, a smartphone (mobile phone), a personal computer (personal computer, PC), a notebook computer, or a tablet computer. For example, the following describes in detail the methods provided in embodiments of this application by using an example in which the image processing method is applied to a terminal device like a notebook computer or a smartphone and the model training method is applied to a server.

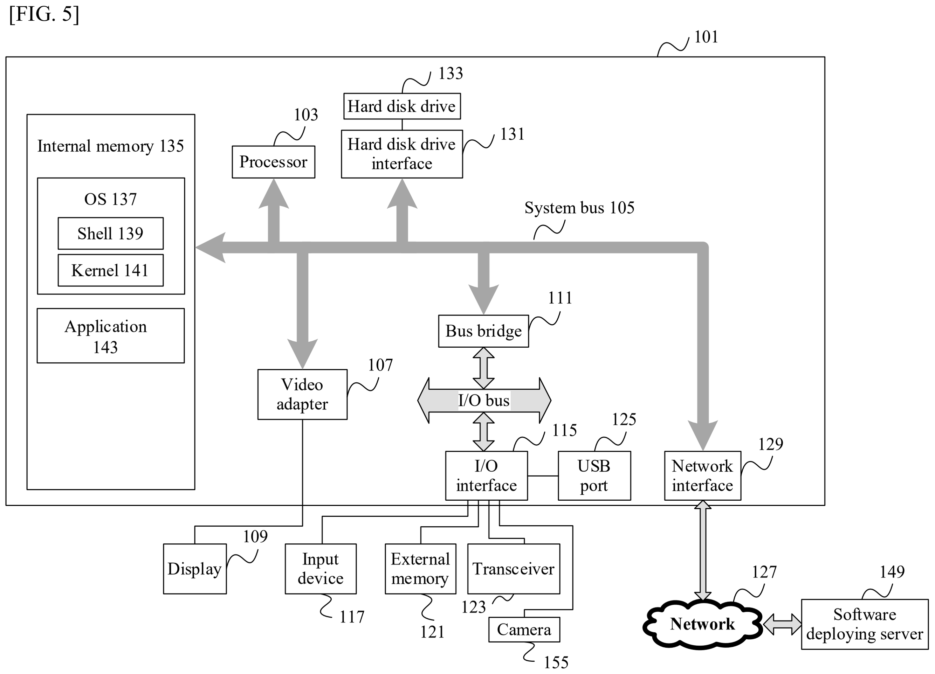

FIG. 5 is a diagram of a structure of an electronic device 101 according to an embodiment of this application. As shown in FIG. 5, the electronic device 101 includes a processor 103, where the processor 103 is coupled to a system bus 105. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus like an ASIC.

The electronic device 101 may communicate with a software deploying server 149 through a network interface 129. For example, the network interface 129 is a hardware network interface, for example, a network interface card. A network 127 may be an external network like the internet, or an internal network like the Ethernet or a virtual private network (virtual private network, VPN). Optionally, the network 127 may alternatively be a wireless network, for example, a Wi-Fi network, a cellular network, or the like.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application 143, and a schedule table of the electronic device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes components of the operating system that are configured to manage a memory, a file, a peripheral, and a system resource. The kernel 141 directly interacts with hardware. The kernel of the operating system usually runs a process, provides inter-process communication, and provides functions such as CPU time slice management, interruption, memory management, and I/O management.

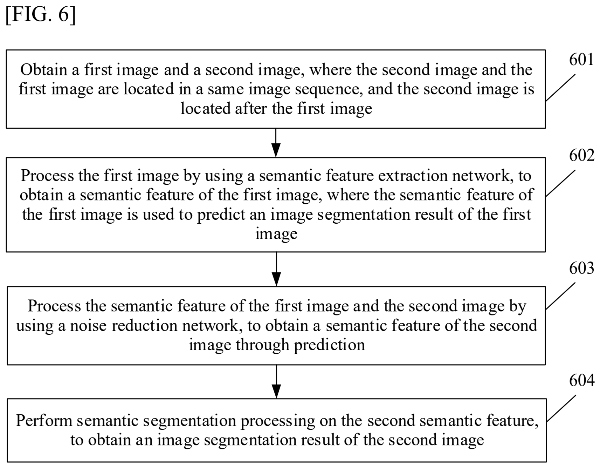

FIG. 6 is a schematic flowchart of an image processing method according to an embodiment of this application. As shown in FIG. 6, the image processing method includes the following steps 601 to 604.

Step 601: Obtain a first image and a second image, where the second image and the first image are located in a same image sequence, and the second image is located after the first image.

Specifically, the image processing method provided in this embodiment may be applied to performing image segmentation on images in a video. The video is essentially an image sequence, and is formed by a plurality of continuously captured images. In addition, for each image in the image sequence, the image may be classified into a reference frame or a non-reference frame. The reference frame may be an image in which a motion status of a person or an object in the image sequence changes significantly. The non-reference frame is an image other than the reference frame in the image sequence. Usually, in the image sequence, one or more non-reference frames are usually included between two adjacent reference frames. Therefore, a difference between the two adjacent reference frames is large, and a difference between a non-reference frame and an adjacent reference frame is small.

In this embodiment, the first image is a reference frame, and the second image is a non-reference frame. In addition, the reference frame and the non-reference frame meet a preset similarity requirement, in other words, the first image and the second image meet the preset similarity requirement. The following describes how to determine the reference frame and the non-reference frame, to ensure that the reference frame and the non-reference frame meet the preset similarity requirement.

In a possible implementation, whether each image in the image sequence is a reference frame may be determined based on a similarity between images. Specifically, for an image sequence, a $1^{st}$ image in the image sequence may be considered as a reference frame; and for any image after the $1^{st}$ image in the image sequence, a similarity between the image and a closest reference frame before the image may be determined. If the similarity between the image and the closest reference frame is greater than or equal to a first threshold, the image may be determined as a non-reference frame; or if the similarity between the image and the closest reference frame is less than the first threshold, the image may be determined as a new reference frame. The similarity between the two images may be measured based on a cosine similarity or structural similarity index measure (Structural Similarity Index measure, SSIM). This is not specifically limited in this embodiment. The first threshold may be, for example, a value like 90%, 92%, or 95%, and may be specifically adjusted based on an actual scenario. This is not specifically limited in this embodiment.

To be specific, for the first image and the second image, because the first image is the reference frame, and the second image is the non-reference frame located after the first image, a similarity between the first image and the second image is not less than the first threshold; and a similarity between the first image and a previous reference frame (namely, a reference frame adjacent to the first image) of the first image in the image sequence is less than the first threshold.

In another possible implementation, a plurality of images of a fixed quantity may be used as an interval, and a $1^{st}$

image in each interval is used as a reference frame, that is, a quantity of non-reference frames between two adjacent reference frames is fixed. For example, it is assumed that five consecutive images are used as an interval, and a 1st image in each interval is used as a reference frame. In this case, there are four non-reference frames between two adjacent reference frames. For example, it is assumed that the image sequence includes 20 images. A 1st image to a 5th image are a 1st interval, a 6th image to a 10th image are a 2nd interval, an 11th image to a 15th image are a 3rd interval, and a 16th image to a 20th image are a 4th interval. In addition, the 1st image, the 6th image, the 11th image, and the 16th image are reference frames; and the 2nd image to the 5th image, the 7th image to the 10th image, the 12th image to the 15th image, and the 17th image to the 20th image are non-reference frames.

In other words, in the image sequence, a quantity of images between the first image and the second image is less than a second threshold. In other words, a plurality of images of a fixed quantity may be used as an interval, and a 1st image in each interval is used as a reference frame, that is, a quantity of non-reference frames between two adjacent reference frames is fixed. In this way, the quantity of images between the first image used as the reference frame and the second image used as the non-reference frame is less than a fixed threshold (namely, the second threshold).

In general, in this embodiment, the reference frame is a representative image in the image sequence, and includes rich information. In addition, the difference between the two adjacent reference frames is large, and the difference between the non-reference frame and the adjacent reference frame is small.

Step 602: Process the first image by using a semantic feature extraction network, to obtain a semantic feature of the first image, where the semantic feature of the first image is used to predict an image segmentation result of the first image.

In this embodiment, for the first image used as the reference frame, the first image may be input to the semantic feature extraction network to extract the image feature, to obtain the semantic feature of the first image. The semantic feature of the first image is the semantic feature of the first image, is essentially an image feature stored in a form of a three-dimensional matrix, and can be used to predict the image segmentation result of the first image.

Specifically, the semantic feature extraction network may be a neural network used to perform semantic estimation, and can extract an image feature based on semantic information of each object in an image, so that the extracted semantic feature can roughly indicate location information of each object in the image, to facilitate subsequent image segmentation. The semantic feature extraction network may be, for example, a convolutional neural network or a transformer network. A structure of the semantic feature extraction network is not specifically limited in this embodiment.

Step 603: Process the semantic feature of the first image and the second image by using a noise reduction network, to obtain a semantic feature of the second image through prediction.

Because the difference between the non-reference frame and the adjacent reference frame is small, in this embodiment, the semantic feature of the reference frame may be reused, and the semantic feature of the non-reference frame is predicted based on the semantic feature of the reference frame and image content of the non-reference frame, to avoid re-extracting the semantic feature of the non-reference frame, and reduce a large amount of computation caused by extracting the semantic feature.

Specifically, the noise reduction network is a neural network, for example, a convolutional neural network. An input of the noise reduction network may include the semantic feature of the reference frame and the non-reference frame, and a difference between the semantic feature of the reference frame and the semantic feature of the non-reference frame can be eliminated based on the non-reference frame, to obtain the semantic feature of the non-reference frame through prediction. Therefore, in this embodiment, the semantic feature of the first image and the second image are input to and processed by using the noise reduction network, so that the semantic feature of the second image (namely, the semantic feature of the second image) can be obtained through prediction by using the noise reduction network. The semantic feature of the second image is essentially an image feature stored in a form of a three-dimensional matrix, and can be used to predict an image segmentation result of the second image.

Optionally, processing the first image by using the semantic feature extraction network may be specifically: performing feature extraction processing on the first image for a first quantity of times by using the semantic feature extraction network.

In addition, processing the semantic feature of the first image and the second image by using the noise reduction network, to obtain the semantic feature of the second image through prediction may specifically include: performing feature extraction processing on the second image for a second quantity of times, to obtain an original feature of the second image. The second quantity of times is less than the first quantity of times. For example, the first quantity of times is 5, and the second quantity of times is 4. For example, feature extraction is first performed on the second image once by using a convolutional network, to obtain a feature map whose size is 1/2 that of the second image, and then downsampling is performed on the feature map by using a bilinear interpolation method, to obtain the original feature whose size is the same as that of the semantic feature of the first image. Then, the semantic feature of the first image and the original feature of the second image are concatenated to obtain a concatenated feature; and then the concatenated feature is input to the noise reduction network, to obtain the semantic feature of the second image through prediction.

In this way, a quantity of times of performing feature extraction processing on the second image is reduced, and then the feature of the second image and the semantic feature of the first image are fused by using the noise reduction network, so that an amount of computation of extracting the semantic feature of the second image can be effectively reduced, and image processing efficiency can be improved.

Step 604: Perform semantic segmentation processing on the semantic feature of the second image, to obtain the image segmentation result of the second image.

After the semantic feature of the second image corresponding to the second image is obtained, semantic segmentation processing may be performed on the semantic feature of the second image, to be specific, each part of the image is segmented based on semantic information of each part included in the semantic feature of the second image, to obtain the image segmentation result of the second image.

In this solution, continuously captured images in an image sequence are classified into a reference frame and a non-reference frame. For a non-reference frame in the image sequence, a semantic feature of a reference frame located before the non-reference frame is reused to predict a semantic feature of the non-reference frame, the semantic feature of the non-reference frame is no longer re-extracted, and then an image segmentation result of the non-reference frame is obtained through prediction based on the semantic feature of the non-reference frame. A similarity between the reference frame and the non-reference frame is effectively used in this solution, and a semantic feature extraction process for the non-reference frame is reduced by reusing the semantic feature of the reference frame. Therefore, an amount of computation of an image segmentation process for the non-reference frame can be effectively reduced, and an application scenario of the image processing method can be extended.

Optionally, steps 601 to 604 describe a process of performing image segmentation on the second image used as the non-reference frame. In actual application, image segmentation usually needs to be performed on each image in the entire image sequence. Therefore, before image segmentation is performed on the second image, image segmentation actually further needs to be performed on the first image.

For example, before step 603, after the semantic feature of the first image is obtained, semantic segmentation processing may be performed on the semantic feature of the first image, to obtain the image segmentation result of the first image. In other words, in a process of performing image segmentation on each image in the image sequence, semantic feature extraction may be first performed on the first image that is in the front of the image sequence and that is used as the reference frame, and image segmentation is implemented based on the extracted semantic feature of the first image. Then, the semantic feature of the first image corresponding to the first image is reused to predict the semantic feature of the second image that is at the rear of the image sequence and that is used as the non-reference frame, to perform image segmentation on the second image. In other words, a semantic feature of a subsequent non-reference frame is predicted by using a semantic feature of a previous reference frame in the image sequence, to simplify the image segmentation process of the non-reference frame.

The image segmentation result of the first image may be obtained through prediction by using a first semantic segmentation network, and the image segmentation result of the second image may be obtained through prediction by using a second semantic segmentation network. To be specific, for the reference frame, the semantic feature of the reference frame is processed by using the first semantic segmentation network, to obtain the image segmentation result of the reference frame. For the non-reference frame, the semantic feature of the non-reference frame is processed by using the second semantic segmentation network, to obtain the image segmentation result of the non-reference frame.

The first image is the reference frame, the semantic feature of the first image corresponding to the first image is extracted by using the semantic feature extraction network, and the semantic feature of the second image corresponding to the second image used as the non-reference frame is obtained through prediction based on the semantic feature of the first image. Therefore, manners of obtaining the semantic features corresponding to the two images are different, and there is a deviation between the semantic feature that is of the second image and that is obtained through prediction for the second image and an actual semantic feature of the second image. Therefore, in this embodiment, the semantic feature of the reference frame and the semantic feature of the non-reference frame may be separately processed by using different semantic segmentation networks, so that the deviation of the semantic feature that is of the non-reference frame and that is obtained through prediction can be well compensated for, and it is ensured that image segmentation effect is finally implemented based on the semantic feature obtained through prediction.

Optionally, the first semantic segmentation network and the second semantic segmentation network have a same network structure, and the first semantic segmentation network and the second semantic segmentation network have different weight parameters. For example, both the first semantic segmentation network and the second semantic segmentation network are neural network structures. Because the weight parameters of the first semantic segmentation network and the second semantic segmentation network are determined in a training process, that the first semantic segmentation network and the second semantic segmentation network have different weight parameters actually indicates that the first semantic segmentation network and the second semantic segmentation network are separately trained in the training process. In other words, during training, training processes for the reference frame and the non-reference frame are separated and independent, and the first semantic segmentation network used to process the reference frame and the second semantic segmentation network used to process the non-reference frame are independently trained, so that performance of the first semantic segmentation network and the second semantic segmentation network can be effectively ensured.

In this solution, the same network structure is used as the first semantic segmentation network and the second semantic segmentation network, and the first semantic segmentation network and the second semantic segmentation network are separately trained, so that the first semantic segmentation network and the second semantic segmentation network have different weight parameters. Precision of performing image segmentation tasks by using the two semantic segmentation networks can be ensured while reducing a network design process by reusing the network structure.

In general, in this embodiment, for the reference frame and the non-reference frame in the image sequence, the reference frame and the non-reference frame may be separately processed through two different branches. In addition, in the process of processing the non-reference frame, the semantic feature of the reference frame is reused, thereby reducing the amount of computation of processing the non-reference frame.

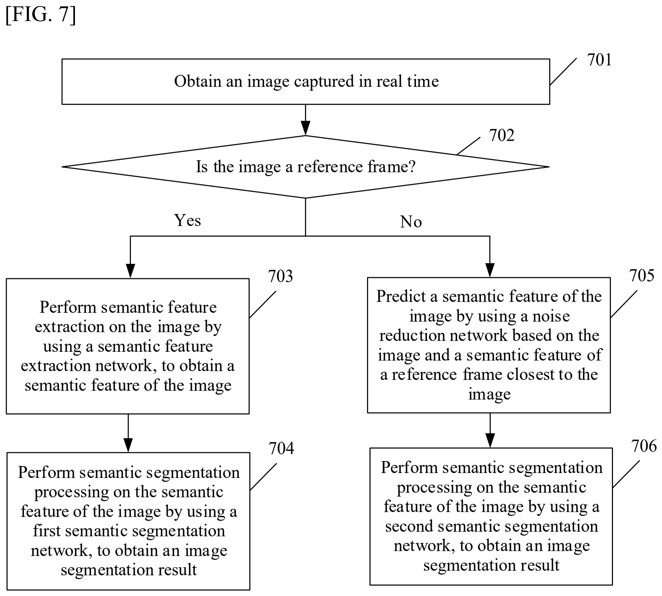

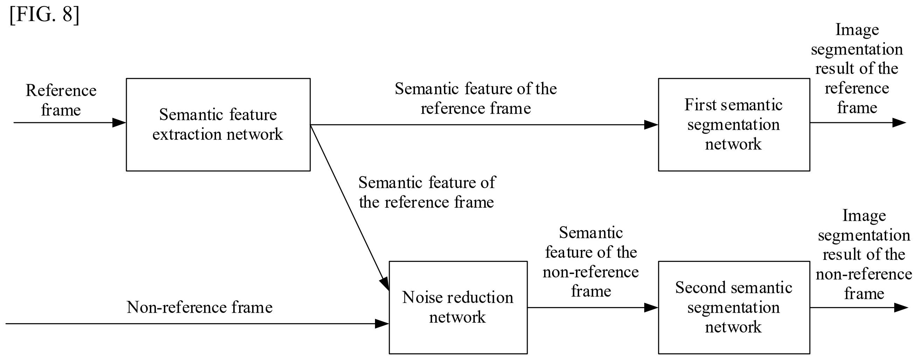

For example, refer to FIG. 7 and FIG. 8. FIG. 7 is a schematic flowchart of performing image segmentation on images captured in real time according to an embodiment of this application. FIG. 8 is a diagram of processing a reference frame and a non-reference frame by using different networks according to an embodiment of this application. As shown in FIG. 7, a process of performing image segmentation on the images captured in real time includes the following steps 701 to 706.

Step 701: Obtain an image captured in real time.

In this embodiment, image segmentation processing is performed on images in a video, and the video includes a plurality of images that are continuously captured in real time. Therefore, in a process of performing the method in this embodiment, images captured in real time may be continuously obtained, and image segmentation processing is performed on the obtained images.

Step 702: Determine whether the obtained image is a reference frame.

For an image obtained in real time, whether the obtained image is a reference frame may be first determined, to determine a subsequent image segmentation processing manner for the image.

In a possible implementation, whether an image is a reference frame may be determined based on a similarity between the image and a previous reference frame. Specifically, a reference frame closest to the image is first obtained, and then a similarity between the image and the reference frame is calculated. If the similarity between the image and the closest reference frame is greater than or equal to a first threshold, the image may be determined as a non-reference frame; or if the similarity between the image and the closest reference frame is less than the first threshold, the image may be determined as a new reference frame.

In another possible implementation, whether an image is a reference frame may alternatively be determined based on a quantity of images between the image and a previous reference frame. Specifically, a reference frame closest to the image is first obtained. If a quantity of images between the image and the reference frame is less than a specific threshold (for example, 4), it is determined that the image is a non-reference frame; or if the quantity of images between the image and the reference frame is not less than the specific threshold, the image is determined as a reference frame.

Step 703: If the obtained image is the reference frame, perform semantic feature extraction on the image by using a semantic feature extraction network, to obtain a semantic feature of the image.

As shown in FIG. 8, for the reference frame, in this embodiment, the image is input to the semantic feature extraction network, and the semantic feature of the image is extracted by using the semantic feature extraction network.

Step 704: Perform semantic segmentation processing on the semantic feature of the image by using a first semantic segmentation network, to obtain an image segmentation result.

For the reference frame, after the semantic feature of the reference frame is extracted by using the semantic feature extraction network, semantic segmentation processing continues to be performed on the semantic feature of the reference frame by using the first semantic segmentation network, to obtain the image segmentation result of the reference frame.

Step 705: If the obtained image is the non-reference frame, predict a semantic feature of the image by using a noise reduction network based on the image and a semantic feature of a reference frame closest to the image in the image sequence.

If the obtained image is the non-reference frame, the semantic feature of the image is no longer extracted by using the semantic feature extraction network, but the semantic feature of the image is predicted by using the noise reduction network. An input of the noise reduction network includes the non-reference frame (namely, the image) and the semantic feature (namely, the feature extracted by using the semantic feature extraction network) of the previous reference frame closest to the image, and an output of the noise reduction network is the semantic feature of the non-reference frame obtained through prediction.

Step 706: Perform semantic segmentation processing on the semantic feature of the image by using a second semantic segmentation network, to obtain an image segmentation result.

For the image used as the non-reference frame, after the semantic feature of the non-reference frame is obtained through prediction by using the noise reduction network, semantic segmentation processing may be performed on the semantic feature of the non-reference frame by using the second semantic segmentation network, to obtain the image segmentation result of the non-reference frame.

Optionally, in this embodiment, both the image segmentation result of the first image and the image segmentation result of the second image are portrait segmentation results, and both the image segmentation result of the first image and the image segmentation result of the second image are used to perform background replacement of a portrait. In other words, the image processing method provided in this embodiment may be applied to a scenario like a video call, a video conference, or video live streaming, and is used to segment a portrait and a background of each image in a video, so as to implement background replacement based on the portrait and the background that are obtained after the segmentation.

In this solution, in the scenario like the video call, the video conference, or the video live streaming, content of different images in the video usually does not change greatly, and is mainly a posture change of a person, that is, the similarity between the reference frame and the non-reference frame is large. Therefore, portrait segmentation in the video is implemented by using the image processing method based on feature reuse, so that portrait segmentation effect can be well ensured while effectively reducing an amount of computation.

The foregoing describes image processing method provided in embodiments of this application. The following describes the model training method provided in embodiments of this application, to help understand a network training manner mentioned in the image processing method.

It may be understood that, in the image processing method, different networks are used to process the reference frame and the non-reference frame. Therefore, in a model training process, different networks for processing the reference frame and the non-reference frame may alternatively be independently trained, to ensure that networks obtained through training are suitable for performing the image processing method.

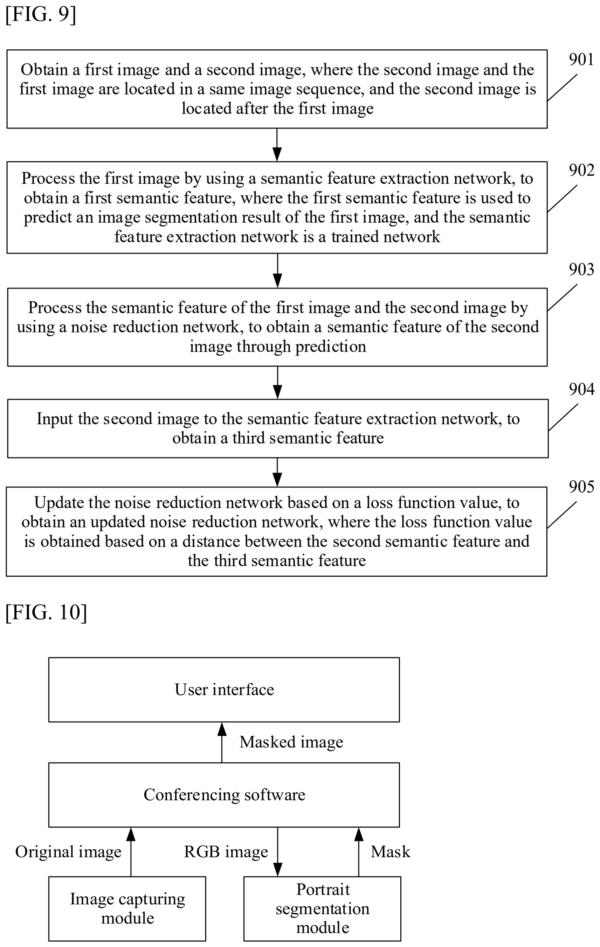

FIG. 9 is a schematic flowchart of a model training method according to an embodiment of this application. As shown in FIG. 9, the model training method includes the following steps 901 to 905.

Step 901: Obtain a first image and a second image, where the second image and the first image are located in a same image sequence, and the second image is located after the first image.

In this embodiment, the first image and the second image are training data in a training set, and are used to train a noise reduction network. In addition, the first image and the second image are also images in an image sequence. Therefore, there is a high similarity between the first image and the first image.

Step 902: Process the first image by using a semantic feature extraction network, to obtain a semantic feature of the first image, where the semantic feature of the first image is used to predict an image segmentation result of the first image, and the semantic feature extraction network is a trained network.

In this embodiment, a network used to process a reference frame and a network used to process a non-reference frame are independently trained, and in a training process, the network used to process the reference frame is first trained, and then the network used to process the non-reference frame is trained. Therefore, when the noise reduction network used to process the non-reference frame is trained, the semantic feature extraction network used to process the reference frame is the trained network.

In addition, in some embodiments, when the first image is processed by using the semantic feature extraction network, the semantic feature of the first image and the second image may be directly obtained, and semantic feature extraction processing does not need to be performed on the first image.

Step 903: Process the semantic feature of the first image and the second image by using the noise reduction network, to obtain a semantic feature of the second image through prediction.

After the semantic feature of the first image is extracted by using the trained semantic feature extraction network, the semantic feature of the first image and the second image may continue to be processed by using the to-be-trained noise reduction network, to obtain the semantic feature of the second image output by the noise reduction network. The semantic feature of the second image is a semantic feature that is of the second image and that is predicted by using the noise reduction network.

Step 904: Input the second image to the semantic feature extraction network, to obtain a target semantic feature.

In this embodiment, the semantic feature of the second image is predicted by using the noise reduction network. Therefore, to guide the noise reduction network to obtain an accurate semantic feature through prediction, in this embodiment, the second image is input to the semantic feature extraction network to obtain the target semantic feature. The target semantic feature is a semantic feature obtained through a complete semantic feature extraction process, namely, an actual semantic feature of the second image.

In addition, structures of the noise reduction network and the semantic feature extraction network in this embodiment are similar to the structures of the noise reduction network and the semantic feature extraction network mentioned in the image processing method. For details, refer to the content described in the image processing method. Details are not described herein again.

Step 905: Update the noise reduction network based on a loss function value, to obtain an updated noise reduction network, where the loss function value is obtained based on a distance between the semantic feature of the second image and the target semantic feature.

After the semantic feature that is of the second image and that is obtained through prediction by using the noise reduction network for the second image and the target semantic feature extracted by using the semantic feature extraction network for the second image are obtained, a loss function may be constructed based on the semantic feature of the second image and the target semantic feature, so that the loss function value is obtained, and the noise reduction network is updated based on the loss function value. The loss function value is obtained based on the distance between the semantic feature of the second image and the target semantic feature, and can indicate a difference between the semantic feature of the second image and the target semantic feature.

In a training process of the noise reduction network, a training objective is to reduce the loss function value as much as possible, so that the semantic feature obtained through prediction by using the noise reduction network is as close as possible to the semantic feature extracted by using the semantic feature network. In the process of training the noise reduction network based on the loss function value, a weight parameter in the noise reduction network may be gradually updated by using a back propagation algorithm and a gradient descent method, to implement training of the noise reduction network.

It may be understood that steps 901 to 905 describe a round of iterative update process in the process of training the noise reduction network. In actual application, a plurality of rounds of iterative update may be performed on the noise reduction network, and a condition for terminating the iterative update may be that the iterative update of the noise reduction network reaches a preset quantity of rounds or the loss function value is not greater than a preset threshold.

In this solution, the semantic feature extraction network for processing the reference frame is pre-trained. For the noise reduction network used to predict the semantic feature of the non-reference frame, the loss function is constructed by using the semantic feature extracted by using the semantic feature extraction network and the semantic feature obtained through prediction by using the noise reduction network, to train the noise reduction network. Finally, the noise reduction network for reducing an amount of computation of extracting the semantic feature of the non-reference frame by reusing the semantic feature of the reference frame can be obtained.

Optionally, because the noise reduction network is only used to predict the semantic feature of the non-reference frame, the semantic feature obtained through prediction is finally used to predict the image segmentation result. Therefore, in addition to enabling the semantic feature obtained through prediction by using the noise reduction network to be as close as possible to the semantic feature extracted by using the semantic feature extraction network, the training objective further includes enabling the finally obtained image segmentation result to be as close as possible to a real segmentation result. Based on this, the loss function may be constructed from two aspects, and then update of the noise reduction network is constrained from two aspects.

Specifically, after the semantic feature that is of the second image and that is obtained through prediction by using the noise reduction network is obtained, semantic segmentation processing is performed on the semantic feature of the second image by using the semantic segmentation network, to obtain an image segmentation result of the second image. Then, a difference value between the image segmentation result of the second image and the real segmentation result of the second image is determined. The real segmentation result of the second image may be a segmentation result obtained through manual pre-labeling, and indicates a segmentation result that is of the second image and that is expected to be output by the network.

In the process of training the noise reduction network, the loss function value used to train the noise reduction network is obtained based on the difference value between the image segmentation result of the second image and the real segmentation result of the second image and the distance between the semantic feature of the second image and the target semantic feature. In other words, the loss function includes two parts. One part is obtained based on the image segmentation result output by the semantic segmentation network and the real segmentation result, and the other part is obtained based on the semantic feature obtained through prediction by using the noise reduction network and the semantic feature actually extracted by using the semantic feature extraction network.

In this solution, the loss function for training the noise reduction network is constructed from two aspects. In one aspect, the loss function is constructed based on the semantic feature obtained through prediction by using the noise reduction network and the semantic feature actually extracted by using the semantic feature extraction network. In another aspect, the loss function is constructed based on the image segmentation result finally output by the semantic segmentation network and the real segmentation result. In this way, during training of the noise reduction network, the finally obtained image segmentation result can be further considered, to ensure that an accurate image segmentation result can be obtained after model training.

Optionally, after the loss function value is obtained based on the foregoing method, the semantic segmentation network used to predict the image segmentation result may be further updated based on the loss function value, to obtain an updated semantic segmentation network.

In other words, the noise reduction network and the semantic segmentation network that are used to process the non-reference frame are trained together based on a same loss function, to ensure that the noise reduction network and the semantic segmentation network that are finally obtained through training can work cooperatively to output the accurate image segmentation result.

In the foregoing descriptions, in the process of training the noise reduction network and the semantic segmentation network that are used to process the non-reference frame, the semantic feature network and the semantic segmentation network that are used to process the reference frame are further trained before the noise reduction network and the semantic segmentation network are trained, and the semantic feature network and the semantic segmentation network that are used to process the reference frame may be trained in a conventional training manner (that is, the loss function is constructed based on the image segmentation result finally output by the network and the real segmentation result). Details are not described herein again.

For ease of understanding, the following describes in detail the image processing method and the model training method provided in embodiments with reference to specific examples.

For example, the image processing method is applied to a scenario like screen recording, a video call, a video conference, or video live streaming. In a process in which a terminal device (for example, a smartphone, a notebook computer, or a tablet computer) used by a user continuously captures and obtains an image sequence, portrait segmentation is performed on an image in the image sequence by using the image processing method provided in embodiments, so that a portrait segmentation result is obtained, and beautification processing is further performed on a portrait or replacement processing is further performed on a background based on the portrait segmentation result.

For example, video conference software on a notebook computer is used as an example. FIG. 10 is a diagram of a system architecture for performing an image processing method according to an embodiment of this application. As shown in FIG. 10, the conference software on the notebook computer obtains an original image by using an image capturing module. If the source image is in a YUV format, the software converts the source image into an RGB image and scales the image to meet an algorithm input requirement. In the RGB image format, each pixel of the image includes three primary colors: red, green, and blue. The entire image is a matrix of length*width*3.

Then, the conference software sends the processed RGB image to a portrait segmentation module, and the portrait segmentation module processes the RGB image by using the image processing method, to obtain a mask. The mask is a two-dimensional matrix. If a value of a matrix element is 1, it indicates that a pixel corresponding to the location belongs to a portrait; or if a value of a matrix element is 0, it indicates that a pixel corresponding to the location belongs to a background. After obtaining the mask, the portrait segmentation module transmits the mask to the conference software for processing such as portrait extraction and background replacement. Finally, the conference software uploads a processed image to a user interface for display.

In a process in which the portrait segmentation module processes the RGB image, the portrait segmentation module first distinguishes whether the RGB image is a reference frame or a non-reference frame. For the reference frame, the portrait segmentation module performs complete semantic feature extraction by using a semantic feature extraction network, and further performs detail prediction of a portrait by using a first semantic segmentation network, to finally obtain a portrait segmentation result (namely, the mask). For the non-reference frame, the portrait segmentation module reuses the semantic feature of the reference frame, predicts a semantic feature of the non-reference frame by using a noise reduction network, and further performs detail prediction of a portrait by using a second semantic segmentation network, to finally obtain a portrait segmentation result.

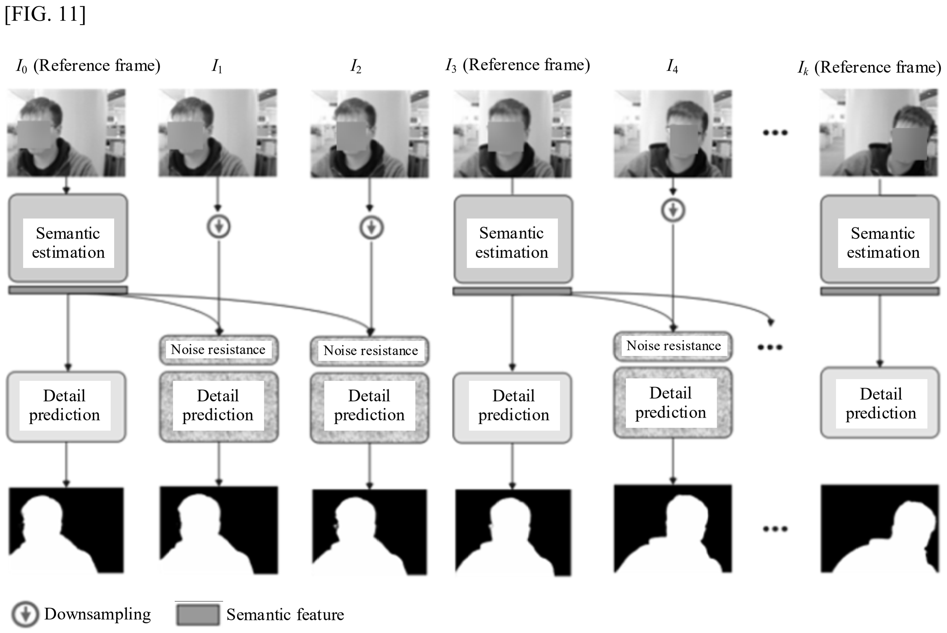

For example, FIG. 11 is a diagram of performing portrait segmentation processing on a reference frame and a non-reference frame according to an embodiment of this application. As shown in FIG. 11, for an image sequence on which portrait segmentation processing needs to be performed, the image sequence includes a plurality of continuously captured images such as I0, I1, I2, I3, I4, ..., and Ik. I0, I3, and Ik are reference frames, and I1, I2, and I4 are non-reference frames.

For the reference frame, a portrait segmentation result is obtained mainly through two steps: semantic estimation and detail prediction. Semantic estimation means to extract a semantic feature of the reference frame by using a semantic feature extraction network, and detail prediction means to process the semantic feature of the reference frame by using a first semantic segmentation network to obtain the portrait segmentation result through prediction.

For the non-reference frame, after downsampling is first performed on the non-reference frame, a semantic feature of the non-reference frame (namely, noise resistance shown in FIG. 11) is predicted by using the semantic feature of the reference frame located before the non-reference frame and the non-reference frame. After the semantic feature of the non-reference frame is obtained, detail prediction of a portrait is performed by using a second semantic segmentation network, to finally obtain a portrait segmentation result of the non-reference frame.

As shown in FIG. 11, for the non-reference frame, after processing is performed by using the method provided in this embodiment, an accurate portrait segmentation result can be obtained, and a complete semantic feature extraction process does not need to be performed, thereby saving a large amount of computation.

In a model training process, a network used to process the reference frame and a network used to process the non-reference frame are independently trained. The network used to process the reference frame includes the semantic feature extraction network that performs semantic estimation, and the first semantic segmentation network that performs detail prediction. The network used to process the non-reference frame includes the noise reduction network that performs a noise reduction process and the second semantic segmentation network that performs detail prediction.

For the semantic feature extraction network used to process the reference frame, the semantic feature extraction network is mainly used to extract the semantic feature of the reference frame, to obtain rough contour information of a portrait. The semantic feature extraction network may use an encoder-decoder structure. Specifically, the semantic feature extraction network may include a lightweight residual network (MobileNetV2), a pyramid pooling module (Pyramid Pooling Module, PPM), and two MobileV2 separated convolutions that are sequentially connected.

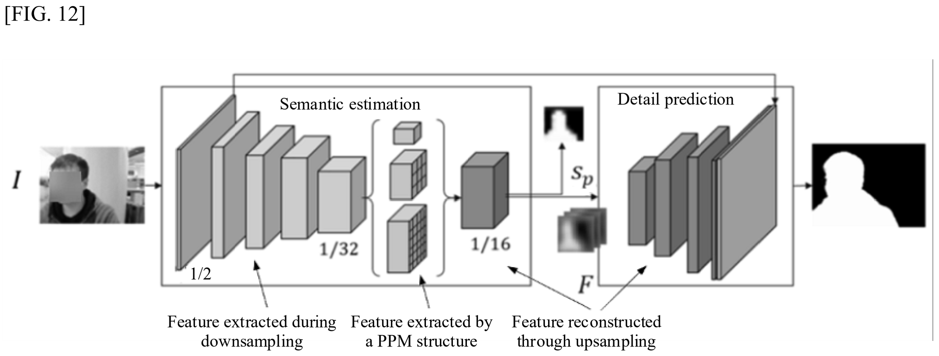

The MobileNetV2 may be considered as a feature extractor with an input being an RGB image matrix of H*W*3, and an output being a feature matrix of h*w*320. Herein, H and W are a height and a width of the original image, and h and w are a height and a width of a feature map. As shown in FIG. 12, in the feature map output by the MobileNetV2, h=H/32, and w=W/32.

The PPM is similar to a plug-in on a network and can improve network effect. The PPM is usually placed behind the feature extractor MobilenetV2 with an input being the feature matrix of h*w*320, and a dimension of the output feature map also being h*w*320.

In the semantic feature extraction network, the input image is processed by the MobileV2 to obtain 320 feature maps each with a size 1/32 that of the original image. These feature maps are processed by the PPM structure to obtain a fused feature. After being upsampled, the fused feature is processed by the two MobileV2 separated convolutions to output 128 semantic features each with a size 1/16 that of the original image. The semantic feature experiences processing on two branches. On one branch, the semantic feature is output for detail prediction in a next phase. On the other branch, a rough mask $s_p$ is obtained after the semantic feature is processed by using a sigmoid activation function in a training phase, so that this phase focuses more on estimation of the rough mask $s_p$. A loss function is designed as follows:

$$\mathcal{L}_s = \left\| s_P - G(\alpha_g) \right\|_2$$

Herein, $\mathcal{L}_s$ indicates a semantic estimation loss function, G() indicates Gaussian blur, $\alpha_g$ is a target mask (namely, a real portrait segmentation result), and $\|\cdot\|_2$ indicates a mean square error. $s_p$ is the rough mask, and an edge is blurry. An edge of the target mask $\alpha_g$ is clear. Therefore, Gaussian blur is applied to the target mask $\alpha_g$ to compare the rough mask $s_p$ with the target mask $\alpha_g$.

For the first semantic segmentation network that receives an output of the semantic feature extraction network as an input, a function of the first semantic segmentation network is to further perform detail prediction based on the semantic feature obtained through semantic estimation, so as to restore a fine portrait edge and details. Compared with the semantic feature extraction network, the first semantic segmentation network has fewer convolutional modules, and a maximum quantity of channels is 128 (a maximum quantity of channels of the semantic feature extraction network is 320).

Specifically, the first semantic segmentation network repeats "two times upsampling and separated convolution processing" four times for the semantic feature output by the semantic feature extraction network, to obtain a final decoded feature, and then the final decoded feature is processed by a sigmoid output layer to obtain a final mask. Intermediate features extracted through semantic estimation are concatenated in the 1/2-sized feature map part in a form similar to a U-NET hop connection. The separated convolution processing means that an original common convolution is divided into two steps: 1. channel-by-channel convolution: k*k convolution is performed on each channel (c1 channels in total) of the original feature map to obtain h*w*c1; and 2. pointwise convolution: 1*1 convolution is performed on a result in the channel-by-channel convolution, and a quantity of channels is changed to c2, to obtain h*w*c2.

For example, $\alpha_d$ indicates a final output of the detail prediction part, and a loss function of this part is shown as follows:

$$\mathcal{L}_d = \sqrt{\left(\alpha_d - \alpha_g\right)^2 + \epsilon^2} + \left\| \nabla\alpha_d - \nabla\alpha_g \right\|$$

Herein, $\mathcal{L}_d$ indicates a detail prediction loss function, a first item of $\mathcal{L}_d$ is an absolute value loss, $\alpha_d$ is the mask output by the first semantic segmentation network, $\alpha_g$ is the target mask (namely, the real portrait segmentation result), $\varepsilon$ is a constant, a second item of $\mathcal{L}_d$ is an edge loss, and $\nabla$ indicates a Sobel edge detection operator, which can improve image edge effect.

Therefore, with reference to the semantic estimation loss function and the detail prediction loss function that are described above, it may be learned that a reference frame loss function of the semantic feature extraction network and the first semantic segmentation network that are used to train and process the reference frame may include two parts: semantic estimation and detail prediction. Details are as follows:

$$\mathcal{L} = \lambda_d \mathcal{L}_d + \lambda_s \mathcal{L}_s$$

Herein, $\mathcal{L}$ indicates the reference frame loss function, $\mathcal{L}_d$ indicates the detail prediction loss function, $\mathcal{L}_s$ indicates the semantic estimation loss function, and $\lambda_d$ and $\lambda_s$ are hyperparameters.

In other words, in a process of training the semantic feature extraction network and the first semantic segmentation network, the semantic feature extraction network and the first semantic segmentation network are actually trained together by using the reference frame loss function.

The foregoing describes the process of training the semantic feature extraction network and the first semantic segmentation network that are used to process the reference frame, and the following describes a process of training the noise reduction network and the second semantic segmentation network that are used to process the non-reference frame.

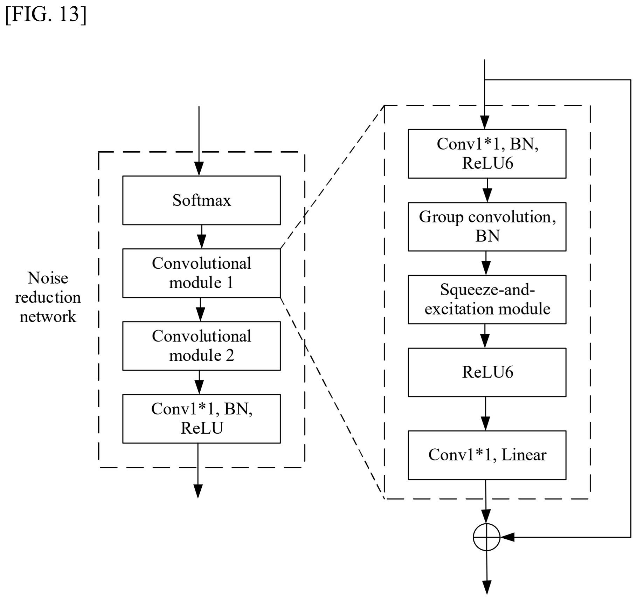

For a $t^{th}$ image in the image sequence, namely, a reference frame $I^t \in \mathbb{R}^{3 \times H \times W}$, a semantic feature and a rough mask of the $t^{th}$ image are respectively denoted as $F^t \in \mathbb{R}^{C \times h \times w}$ and $\alpha_s^t \in \mathbb{R}^{h \times w}$ (h and w indicate a height and a width of a feature map, which are both 1/16 of a width and a height of the original image, and C is a quantity of channels, namely, a quantity of features). For a $(t+k)^{th}$ image in the image sequence, namely, a non-reference frame $I^{t+k}$, a semantic feature and a rough mask of the image are denoted as $F^{t+k}$ and $\alpha_s^{t+k}$. Based on analysis, a similarity between $F_s^t$ and $F_s^{t+k}$ is high, and a Gaussian distribution feature is presented in error statistics. Therefore, FIG. 13 is a schematic flowchart of processing a non-reference frame according to an embodiment of this application. A problem to be resolved in this solution is how to design a function or a filter $f$ to make the filtered result $\hat{F}^{t+k}$ as approximate as possible to the real feature $F_s^{t+k}$.

$$f(F^t) = \hat{F}^{t+k} \rightarrow F^{t+k}$$

The softmax function $\phi(\cdot)$ is used herein to convert a feature matrix into a probability random field. Details are as follows:

$$\phi(F_i) = \frac{\exp(F_i/T)}{\Sigma_{i=1}^{w \cdot h} \exp(F_i/T)}$$

It should be noted that a neural network training process is a process of fitting a continuous function in real domain. An advantage of converting the feature matrix into the probability random field is that information of the original matrix is retained to a maximum extent from a probability perspective, and another advantage is that discontinuous points, namely, elements whose absolute values may be excessively large or excessively small in the current matrix, can be eliminated through conversion, to avoid affecting neural network parameter fitting.

A problem to be resolved in this solution is converted into a supervised conditional probability distribution generation problem. A filter $f(\cdot)$ can be approximated by using a neural network $f_\theta(\cdot)$.

$$\phi(f_\theta(F^t)) = \phi(\hat{F}^{t+k}) \rightarrow \phi(F^{t+k})$$

For example, FIG. 13 is a diagram of a structure of a noise reduction network according to an embodiment of this application. As shown in FIG. 13, the noise reduction network includes a softmax function, a convolutional module 1, a convolutional module 2, a 1*1 convolutional layer (Conv), a BN function, and a ReLU function. The convolutional module 1 and the convolutional module 2 may use a same structure. In FIG. 13, the convolutional module 1 includes a 1*1 convolutional layer, a BN function, a ReLU function, a 5*5 group convolution with an expansion rate of 2, an SE module, a ReLU function, a 1*1 convolutional layer, and a linear (Linear) layer. The convolutional module 1 and the convolutional module 2 may be used to extend a receptive field to the entire feature map on a scale of 1/16.

In addition, after the semantic feature of the non-reference frame is obtained through prediction by using the noise reduction network, a noise reduction loss function may be calculated based on the semantic feature obtained through prediction by using the noise reduction network and the semantic feature that is of the non-reference frame and that is extracted by using the semantic feature extraction network. Specifically, a KL divergence may be used to measure an error between a predicted distribution and a real distribution. Details are shown in the following formula:

$$\mathcal{L}_F = KL\left(\phi(F^{t+k})||\phi\left(\hat{F}^{t+k}\right)\right) = \frac{1}{h \cdot w} \cdot \sum_{i}^{h \cdot w} KL(\phi(F_i^{t+k})||\phi\left(\hat{F}_i^{t+k}\right))$$

Herein, $\mathcal{L}_F$ indicates the noise reduction loss function, $\phi(F^{t+k})$ indicates the semantic feature output by the semantic feature extraction network, $\phi(\hat{F}^{t+k})$ indicates the semantic feature obtained through prediction by using the noise reduction network, and KL() indicates the KL divergence, and is a metric used to measure a similarity between two probability distributions.

Further, the semantic feature output by the noise reduction network is input to the second semantic segmentation network for detail prediction, to obtain a mask of the non-reference frame. Similarly, with reference to the detail prediction loss function, a detail prediction loss function corresponding to the non-reference frame may also be constructed based on the mask output by the second semantic segmentation network and the real mask of the non-reference frame. Then, a final non-reference frame loss function is obtained based on the noise reduction loss function and the detail prediction loss function corresponding to the non-reference frame. Details are shown in the following formula:

$$\mathcal{L} = \lambda_F \mathcal{L}_F + \lambda_d \mathcal{L}_d$$

Herein, $\mathcal{L}$ indicates the non-reference frame loss function, $\mathcal{L}_d$ indicates the detail prediction loss function corresponding to the non-reference frame, $\mathcal{L}_F$ indicates the noise reduction loss function, and $\lambda_d$ and $\lambda_s$ are hyperparameters.

In other words, in a process of training the noise reduction network and the second semantic segmentation network, the noise reduction network and the second semantic segmentation network are actually trained together by using the non-reference frame loss function.

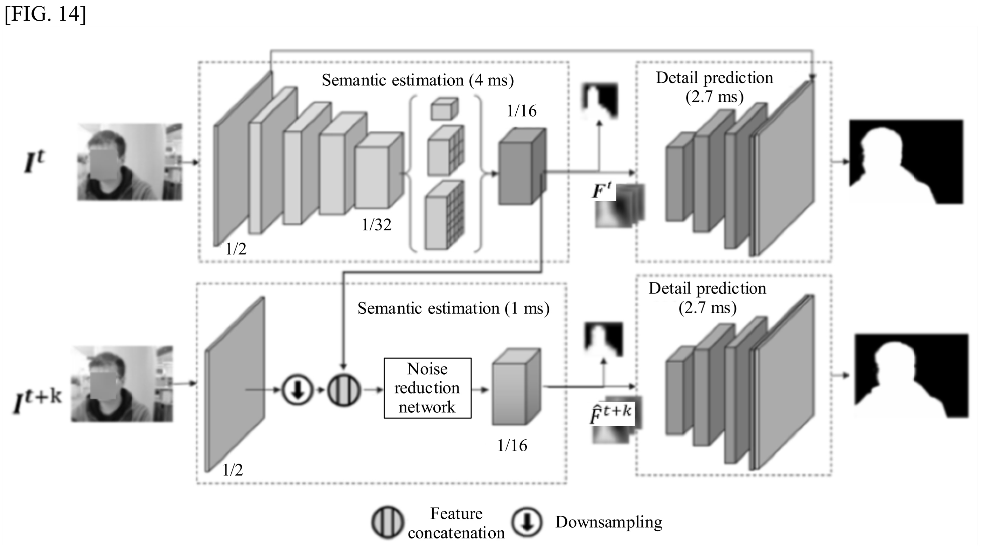

For example, FIG. 14 is a diagram of comparison of processing a reference frame and a non-reference frame according to an embodiment of this application. As shown in FIG. 14, a process of processing the reference frame includes two steps: semantic estimation and detail prediction, and the semantic estimation takes 4 ms, and the detail prediction takes 2.7 ms. A process of processing the non-reference frame also includes two steps: semantic estimation and detail prediction. In addition, a semantic feature of the reference frame is reused in a semantic estimation process for processing the non-reference frame. Therefore, the semantic estimation for processing the non-reference frame takes 1 ms, and the detail prediction takes 2.7 ms. It is clear that in the process of predicting the semantic feature of the non-reference frame, the semantic feature of the reference frame is reused, and a semantic feature extraction process does not need to be completely performed once. Therefore, a large amount of computation and computation time can be reduced.

The foregoing embodiments describe the methods provided in embodiments of this application. The following describes devices that perform the foregoing methods.

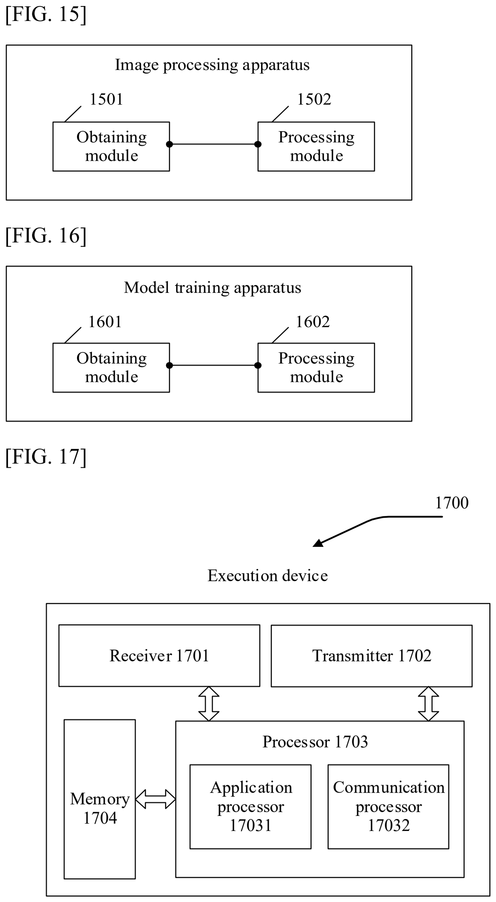

FIG. 15 is a diagram of a structure of an image processing apparatus according to an embodiment of this application. As shown in FIG. 15, the image processing apparatus includes: an obtaining module 1501, configured to obtain a first image and a second image, where the second image and the first image are located in a same image sequence, and the second image is located after the first image; and a processing module 1502, configured to process the first image by using a semantic feature extraction network, to obtain a semantic feature of the first image, where the semantic feature of the first image is used to predict an image segmentation result of the first image, and the semantic feature extraction network is a trained network; the processing module 1502 is further configured to process the semantic feature of the first image and the second image by using a noise reduction network, to obtain a semantic feature of the second image through prediction; the processing module 1502 is further configured to input the second image to the semantic feature extraction network, to obtain a target semantic feature; and the processing module 1502 is further configured to update the noise reduction network based on a loss function value, to obtain an updated noise reduction network, where the loss function value is obtained based on a distance between the semantic feature of the second image and the target semantic feature.

In a possible implementation, a similarity between the first image and the second image is not less than a first threshold.

In a possible implementation, in the image sequence, a quantity of images between the first image and the second image is less than a second threshold.

In a possible implementation, the processing module 1502 is specifically configured to: perform feature extraction processing on the first image for a first quantity of times by using the semantic feature extraction network; perform feature extraction processing on the second image for a second quantity of times, to obtain an original feature of the second image, where the second quantity of times is less than the first quantity of times; and process the semantic feature of the first image and the original feature of the second image by using the noise reduction network, to obtain the semantic feature of the second image through prediction.

In a possible implementation, the processing module 1502 is specifically configured to: concatenate the semantic feature of the first image and the original feature of the second image to obtain a concatenated feature; and input the concatenated feature to the noise reduction network, to obtain the semantic feature of the second image through prediction.

In a possible implementation, the noise reduction network includes a convolutional neural network or an attention network.

In a possible implementation, the processing module 1502 is further configured to: process the semantic feature of the first image by using a first semantic segmentation network, to obtain the image segmentation result of the first image; and process the semantic feature of the second image by using a second semantic segmentation network, to obtain the image segmentation result of the second image, where the first semantic segmentation network and the second semantic segmentation network have a same network structure, and the first semantic segmentation network and the second semantic segmentation network have different weight parameters.

In a possible implementation, both the image segmentation result of the first image and the image segmentation result of the second image are portrait segmentation results, and both the image segmentation result of the first image and the image segmentation result of the second image are used to perform background replacement of a portrait.

FIG. 16 is a diagram of a structure of a model training apparatus according to an embodiment of this application. As shown in FIG. 16, the model training apparatus includes: an obtaining module 1601, configured to obtain a semantic feature of a first image and a second image, where the second image and the first image are located in a same image sequence, the second image is located after the first image, the semantic feature of the first image is obtained by processing the first image by using a semantic feature extraction network, the semantic feature of the first image is used to predict an image segmentation result of the first image, and the semantic feature extraction network is a trained network; and a processing module 1602, configured to process the semantic feature of the first image and the second image by using a noise reduction network, to obtain a semantic feature of the second image through prediction, where the processing module 1602 is further configured to input the second image to the semantic feature extraction network, to obtain a target semantic feature; and the processing module 1602 is further configured to update the noise reduction network based on a loss function value, to obtain an updated noise reduction network, where the loss function value is obtained based on a distance between the semantic feature of the second image and the target semantic feature.

In a possible implementation, a similarity between the first image and the second image is not less than a first threshold.

In a possible implementation, in the image sequence, a quantity of images between the first image and the second image is less than a second threshold.

In a possible implementation, the processing module 1602 is further configured to: perform semantic segmentation processing on the semantic feature of the second image by using a semantic segmentation network, to obtain an image segmentation result of the second image; and determine a difference value between the image segmentation result of the second image and a real segmentation result of the second image, where the real segmentation result of the second image is obtained through pre-labeling, and the loss function value is obtained based on the difference value and the distance between the semantic feature of the second image and the target semantic feature.

In a possible implementation, the processing module 1602 is further configured to update the semantic segmentation network based on the loss function value, to obtain an updated semantic segmentation network.

In a possible implementation, the semantic feature of the first image is obtained by performing feature extraction processing on the first image for a first quantity of times by using the semantic feature extraction network; and the processing module 1602 is specifically configured to: perform feature extraction processing on the second image for a second quantity of times, to obtain an original feature of the second image, where the second quantity of times is less than the first quantity of times; and process the semantic feature of the first image and the original feature of the second image by using the noise reduction network, to obtain the semantic feature of the second image through prediction.

In a possible implementation, the processing module 1602 is specifically configured to: concatenate the semantic feature of the first image and the original feature of the second image to obtain a concatenated feature; and input the concatenated feature to the noise reduction network, to obtain the semantic feature of the second image through prediction.

In a possible implementation, the noise reduction network includes a convolutional neural network or an attention network.

In a possible implementation, both the image segmentation result of the first image and the image segmentation result of the second image are portrait segmentation results, and both the image segmentation result of the first image and the image segmentation result of the second image are used to perform background replacement of a portrait.

The following describes an execution device provided in embodiments of this application. FIG. 17 is a diagram of a structure of an execution device according to an embodiment of this application. The execution device 1700 may be specifically represented as a mobile phone, a tablet computer, a notebook computer, an intelligent wearable device, a server, or the like. This is not limited herein. Specifically, the execution device 1700 includes a receiver 1701, a transmitter 1702, a processor 1703, and a memory 1704 (there may be one or more processors 1703 in the execution device 1700, and one processor is used as an example in FIG. 17). The processor 1703 may include an application processor 17031 and a communication processor 17032. In some embodiments of this application, the receiver 1701, the transmitter 1702, the processor 1703, and the memory 1704 may be connected through a bus or in another manner.

The memory 1704 may include a read-only memory and a random access memory, and provide instructions and data for the processor 1703. A part of the memory 1704 may further include a non-volatile random access memory (non-volatile random access memory, NVRAM). The memory 1704 stores a processor and operation instructions, an executable module, a data structure, a subset thereof, or an extension set thereof. The operation instructions may include various operation instructions for implementing various operations.

The processor 1703 controls operations of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1703 or may be implemented by the processor 1703. The processor 1703 may be an integrated circuit chip and has a signal processing capability. In an implementation process, steps in the foregoing method can be implemented by using a hardware integrated logic circuit in the processor 1703, or by using instructions in a form of software. The processor 1703 may be a general-purpose processor, a digital signal processor (digital signal processor, DSP), a microprocessor, or a microcontroller; or may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1703 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1704, and the processor 1703 reads information in the memory 1704 and completes the steps in the foregoing methods in combination with hardware of the processor 1703.

The receiver 1701 may be configured to: receive input digital or character information, and generate a signal input related to a related setting and function control of the execution device. The transmitter 1702 may be configured to output the digital or character information through a first interface. The transmitter 1702 may be further configured to send instructions to a disk group through the first interface, to modify data in the disk group. The transmitter 1702 may further include a display device like a display.

The execution device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the model structure determining method described in the foregoing embodiments, or a chip in a training device performs the model structure determining method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

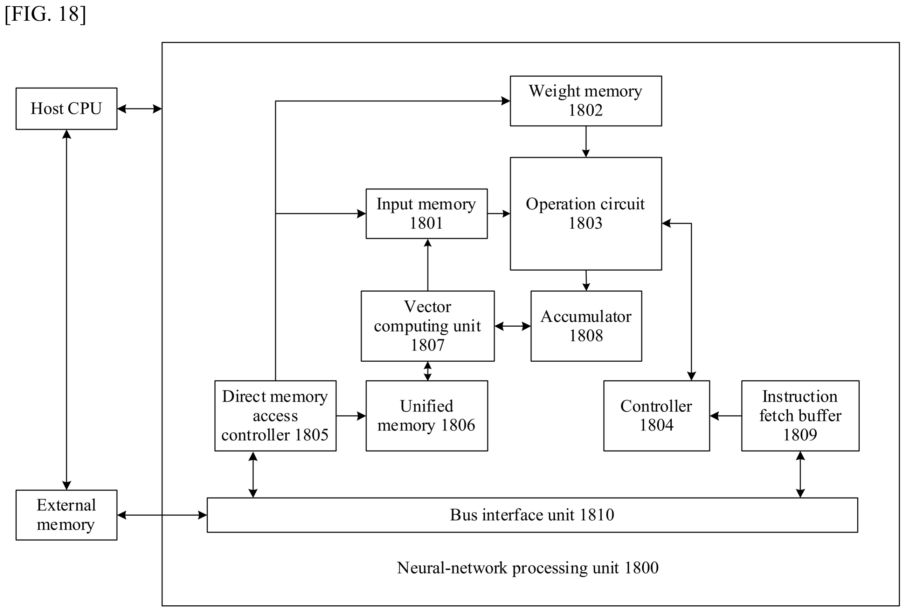

Specifically, FIG. 18 is a diagram of a structure of a chip according to an embodiment of this application. The chip may be represented as a neural-network processing unit NPU 1800. The NPU 1800 is mounted to a host CPU (Host CPU) as a coprocessor, and a task is allocated by the host CPU. A core part of the NPU is an operation circuit 1803. A controller 1804 controls the operation circuit 1803 to extract matrix data in a memory and performs multiplication operation.

In some implementations, the operation circuit 1803 includes a plurality of process engines (Process Engine, PE). In some implementations, the operation circuit 1803 is a two-dimensional systolic array. The operation circuit 1803 may alternatively be a one-dimensional systolic array or another electronic circuit capable of performing mathematical operation such as multiplication and addition. In some implementations, the operation circuit 1803 is a general-purpose matrix processor.

For example, it is assumed that there are an input matrix A, a weight matrix B, and an output matrix C. The operation circuit fetches, from a weight memory 1802, data corresponding to the matrix B, and buffers the data on each PE in the operation circuit. The operation circuit fetches data of the matrix A from an input memory 1801, to perform a matrix operation on the matrix B, and stores an obtained partial result or an obtained final result of the matrix in an accumulator (accumulator) 1808.

A unified memory 1806 is configured to store input data and output data. Weight data is directly transferred to the weight memory 1802 through a direct memory access controller (Direct Memory Access Controller, DMAC) 1805. The input data is also transferred to the unified memory 1806 by using the DMAC.

A BIU is a bus interface unit, namely, a bus interface unit 1810, and is used for interaction between an AXI bus and the DMAC and between the AXI bus and an instruction fetch buffer (Instruction Fetch Buffer, IFB) 1809.

The bus interface unit (Bus Interface Unit, BIU) 1810 is used by the instruction fetch buffer 1809 to obtain instructions from an external memory, and is further used by the direct memory access controller 1805 to obtain original data of the input matrix A or the weight matrix B from the external memory.

The DMAC is mainly configured to transfer input data in the external memory DDR to the unified memory 1806, transfer the weight data to the weight memory 1802, or transfer the input data to the input memory 1801.

A vector computing unit 1807 includes a plurality of operation processing units, and performs further processing, for example, vector multiplication, vector addition, exponential operation, logarithmic operation, or value comparison, on an output of the operation circuit 1803 if necessary. The vector computing unit 1607 is mainly configured to perform network computing, for example, batch normalization (Batch Normalization), pixel-level summation, or up-sampling on a feature plane, at a non-convolutional/fully connected layer of a neural network.

In some implementations, the vector computing unit 1807 can store a processed output vector in the unified memory 1806. For example, the vector computing unit 1807 may apply a linear function or a nonlinear function to the output of the operation circuit 1803, for example, perform linear interpolation on a feature plane extracted at a convolutional layer, and for another example, obtain a vector of an accumulated value to generate an activation value. In some implementations, the vector computing unit 1807 generates a normalized value, a value obtained through pixel-level addition, or both a normalized value and a value obtained through pixel-level addition. In some implementations, the processed output vector can be used as an activation input to the operation circuit 1803, for example, used at a subsequent layer in the neural network.

The instruction fetch buffer (instruction fetch buffer) 1809 connected to the controller 1804 is configured to store instructions used by the controller 1804.

The unified memory 1806, the input memory 1801, the weight memory 1802, and the instruction fetch buffer 1809 are all on-chip memories. The external memory is private to a hardware architecture of the NPU.

Any one of the processors mentioned above may be a general-purpose central processing unit, a microprocessor, an ASIC, or one or more integrated circuits for controlling program execution.

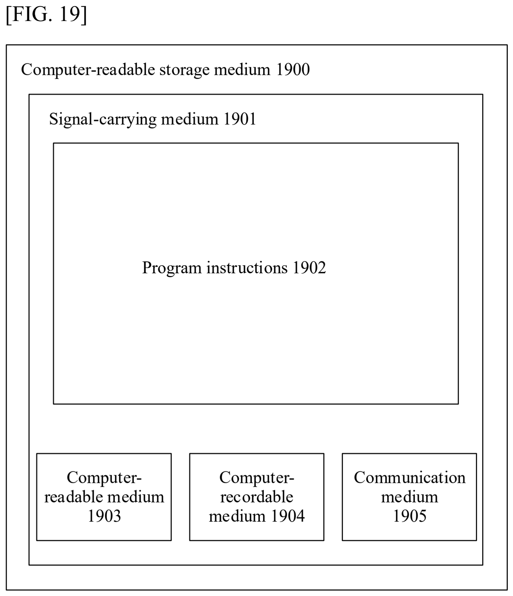

FIG. 19 is a diagram of a structure of a computer-readable storage medium according to an embodiment of this application. This application further provides a computer-readable storage medium. In some embodiments, the method disclosed in FIG. 6 may be implemented as computer program instructions encoded in a machine-readable format on the computer-readable storage medium or encoded in another non-transitory medium or product.

FIG. 19 shows an example of a conceptual partial view of an example computer-readable storage medium arranged according to at least some embodiments shown herein. The example computer-readable storage medium includes a computer program for executing a computer process on a computing device.

In an embodiment, a computer-readable storage medium 1900 is provided by using a signal-carrying medium 1901. The signal-carrying medium 1901 may include one or more program instructions 1902, and when the one or more program instructions are run by one or more processors, the foregoing functions or some functions described in FIG. 3 may be provided. In addition, the program instructions 1902 in FIG. 19 are also described as example instructions.

In some examples, the signal-carrying medium 1901 may include a computer-readable medium 1903, for example, but not limited to, a hard disk drive, a compact disc (CD), a digital video disc (DVD), a digital tape, a memory, a ROM, or a RAM.

In some implementations, the signal-carrying medium 1901 may include a computer-recordable medium 1904, for example but not limited to, a memory, a read/write (R/W) CD, or an R/W DVD. In some implementations, the signal-carrying medium 1901 may include a communication medium 1905, for example, including but not limited to a digital and/or analog communication medium (for example, an optical cable, a waveguide, a wired communication link, or a wireless communication link). Therefore, for example, the signal-carrying medium 1901 may be conveyed by the wireless communication medium 1905 (for example, a wireless communication medium that complies with the IEEE 802 standard or another transmission protocol).

The one or more program instructions 1902 may be, for example, computer-executable instructions or logic implementation instructions. In some examples, a computing device of a computing device may be configured to provide various operations, functions, or actions in response to the program instructions 1902 that are transmitted to the computing device through one or more of the computer-readable medium 1903, the computer-recordable medium 1904, and/or the communication medium 1905.

All or a part of the foregoing embodiments may be implemented by software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

A person skilled in the art may clearly understand that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium, and includes several instructions for instructing a computer device (which may be a personal computer, a server, or a network device) to perform all or a part of the steps of the methods in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing embodiments are merely intended to describe the technical solutions of this application, but are not intended to limit this application. Although this application is described in detail with reference to the foregoing embodiments, a person of ordinary skills in the art should understand that the technical solutions described in the foregoing embodiments may still be modified or some technical features thereof may be equivalently replaced. These modifications or replacements do not enable essence of a corresponding technical solution to depart from the spirit and scope of the technical solutions of embodiments of this application.

## Claims

1. An image processing method, comprising:

   obtaining a first image and a second image, wherein the second image and the first image are located in a same image sequence, and the second image is located after the first image;
   processing the first image by using a semantic feature extraction network, to obtain a semantic feature of the first image, wherein the semantic feature of the first image is used to predict an image segmentation result of the first image; and

processing the semantic feature of the first image and the second image by using a noise reduction network, to obtain a semantic feature of the second image through prediction, wherein the semantic feature of the second image is used to obtain an image segmentation result of the second image.

2. The method according to claim 1, wherein a similarity between the first image and the second image is not less than a first threshold.

3. The method according to claim 1 or 2, wherein in the image sequence, a quantity of images between the first image and the second image is less than a second threshold.

4. The method according to any one of claims 1 to 3, wherein processing the first image by using the semantic feature extraction network comprises:

performing feature extraction processing on the first image for a first quantity of times by using the semantic feature extraction network; and
processing the semantic feature of the first image and the second image by using the noise reduction network, to obtain the semantic feature of the second image through prediction comprises:

performing feature extraction processing on the second image for a second quantity of times, to obtain an original feature of the second image, wherein the second quantity of times is less than the first quantity of times; and
processing the semantic feature of the first image and the original feature of the second image by using the noise reduction network, to obtain the semantic feature of the second image through prediction.

5. The method according to claim 4, wherein processing the semantic feature of the first image and the original feature of the second image by using the noise reduction network, to obtain the semantic feature of the second image through prediction comprises:

concatenating the semantic feature of the first image and the original feature of the second image to obtain a concatenated feature; and
inputting the concatenated feature to the noise reduction network, to obtain the semantic feature of the second image through prediction.

6. The method according to any one of claims 1 to 5, wherein the noise reduction network comprises a convolutional neural network or an attention network.

7. The method according to any one of claims 1 to 6, wherein the method further comprises:

processing the semantic feature of the first image by using a first semantic segmentation network, to obtain the image segmentation result of the first image; and
processing the semantic feature of the second image by using a second semantic segmentation network, to obtain the image segmentation result of the second image, wherein
the first semantic segmentation network and the second semantic segmentation network have a same network structure, and the first semantic segmentation network and the second semantic segmentation network have different weight parameters.

8. The method according to any one of claims 1 to 7, wherein both the image segmentation result of the first image and the image segmentation result of the second image are portrait segmentation results, and both the image segmentation result of the first image and the image segmentation result of the second image are used to perform background replacement of a portrait.

9. A model training method, comprising:

obtaining a semantic feature of a first image and a second image, wherein the second image and the first image are located in a same image sequence, the second image is located after the first image, the semantic feature of the first image is obtained by processing the first image by using a semantic feature extraction network, the semantic feature of the first image is used to predict an image segmentation result of the first image, and the semantic feature extraction network is a trained network;

processing the semantic feature of the first image and the second image by using a noise reduction network, to obtain a semantic feature of the second image through prediction;

inputting the second image to the semantic feature extraction network, to obtain a target semantic feature; and updating the noise reduction network based on a loss function value, to obtain an updated noise reduction network, wherein the loss function value is obtained based on a distance between the semantic feature of the second image and the target semantic feature.

10. The method according to claim 9, wherein a similarity between the first image and the second image is not less than a first threshold.

11. The method according to claim 9 or 10, wherein in the image sequence, a quantity of images between the first image and the second image is less than a second threshold.

12. The method according to any one of claims 9 to 11, wherein the method further comprises:

performing semantic segmentation processing on the semantic feature of the second image by using a semantic segmentation network, to obtain an image segmentation result of the second image; and determining a difference value between the image segmentation result of the second image and a real segmentation result of the second image, wherein the real segmentation result of the second image is obtained through pre-labeling; and

the loss function value is obtained based on the difference value and the distance between the semantic feature of the second image and the target semantic feature.

13. The method according to any one of claims 9 to 12, wherein

the semantic feature of the first image is obtained by performing feature extraction processing on the first image for a first quantity of times by using the semantic feature extraction network; and processing the semantic feature of the first image and the second image by using the noise reduction network, to obtain the semantic feature of the second image through prediction comprises:

performing feature extraction processing on the second image for a second quantity of times, to obtain an original feature of the second image, wherein the second quantity of times is less than the first quantity of times; and

processing the semantic feature of the first image and the original feature of the second image by using the noise reduction network, to obtain the semantic feature of the second image through prediction.

14. The method according to claim 13, wherein processing the semantic feature of the first image and the original feature of the second image by using the noise reduction network, to obtain the semantic feature of the second image through prediction comprises:

concatenating the semantic feature of the first image and the original feature of the second image to obtain a concatenated feature; and

inputting the concatenated feature to the noise reduction network, to obtain the semantic feature of the second image through prediction.

15. An image processing apparatus, comprising:

an obtaining module, configured to obtain a first image and a second image, wherein the second image and the first image are located in a same image sequence, and the second image is located after the first image; and a processing module, configured to process the first image by using a semantic feature extraction network, to obtain a semantic feature of the first image, wherein the semantic feature of the first image is used to predict an image segmentation result of the first image, wherein

the processing module is further configured to process the semantic feature of the first image and the second image by using a noise reduction network, to obtain a semantic feature of the second image through prediction, wherein the semantic feature of the second image is used to obtain an image segmentation result of the second image.

16. The apparatus according to claim 15, wherein a similarity between the first image and the second image is not less than a first threshold.

17. The apparatus according to claim 15 or 16, wherein in the image sequence, a quantity of images between the first image and the second image is less than a second threshold.

18. The apparatus according to any one of claims 15 to 17, wherein the processing module is specifically configured to:

perform feature extraction processing on the first image for a first quantity of times by using the semantic feature extraction network;
perform feature extraction processing on the second image for a second quantity of times, to obtain an original feature of the second image, wherein the second quantity of times is less than the first quantity of times; and
process the semantic feature of the first image and the original feature of the second image by using the noise reduction network, to obtain the semantic
feature of the second image through prediction.

19. The apparatus according to claim 18, wherein the processing module is specifically configured to:

concatenate the semantic feature of the first image and the original feature of the second image to obtain a concatenated feature; and
input the concatenated feature to the noise reduction network, to obtain the semantic feature of the second image through prediction.

20. The apparatus according to any one of claims 15 to 19, wherein the noise reduction network comprises a convolutional neural network or an attention network.

21. The apparatus according to any one of claims 15 to 20, wherein the processing module is further configured to:

process the semantic feature of the first image by using a first semantic segmentation network, to obtain the image segmentation result of the first image; and
process the semantic feature of the second image by using a second semantic segmentation network, to obtain the image segmentation result of the second image, wherein
the first semantic segmentation network and the second semantic segmentation network have a same network structure, and the first semantic segmentation network and the second semantic segmentation network have different weight parameters.

22. A model training apparatus, comprising:

an obtaining module, configured to obtain a semantic feature of a first image and a second image, wherein the second image and the first image are located in a same image sequence, the second image is located after the first image, the semantic feature of the first image is obtained by processing the first image by using a semantic feature extraction network, the semantic feature of the first image is used to predict an image segmentation result of the first image, and the semantic feature extraction network is a trained network; and
the processing module, configured to process the semantic feature of the first image and the second image by using a noise reduction network, to obtain a semantic feature of the second image through prediction, wherein
the processing module is further configured to input the second image to the semantic feature extraction network, to obtain a target semantic feature; and
the processing module is further configured to update the noise reduction network based on a loss function value, to obtain an updated noise reduction network, wherein the loss function value is obtained based on a distance between the semantic feature of the second image and the target semantic feature.

23. The apparatus according to claim 22, wherein the processing module is further configured to:

perform semantic segmentation processing on the semantic feature of the second image by using a semantic segmentation network, to obtain an image segmentation result of the second image; and
determine a difference value between the image segmentation result of the second image and a real segmentation result of the second image, wherein
the loss function value is obtained based on the difference value and the distance between the semantic feature of the second image and the target semantic feature.

24. The apparatus according to claim 22 or 23, wherein

the semantic feature of the first image is obtained by performing feature extraction processing on the first image for a first quantity of times by using the semantic feature extraction network; and
the processing module is further configured to:

perform feature extraction processing on the second image for a second quantity of times, to obtain an original feature of the second image, wherein the second quantity of times is less than the first quantity of times; and
process the semantic feature of the first image and the original feature of the second image by using the noise reduction network, to obtain the semantic feature of the second image through prediction.

25. An image processing apparatus, comprising a memory and a processor, wherein the memory stores code, the processor is configured to execute the code, and when the code is executed, the apparatus performs the method according to any one of claims 1 to 8.

26. A model training apparatus, comprising a memory and a processor, wherein the memory stores code, the processor is configured to execute the code, and when the code is executed, the apparatus performs the method according to any one of claims 9 to 14.

27. A computer storage medium, wherein the computer storage medium stores instructions, and when the instructions are executed by a computer, the computer is enabled to implement the method according to any one of claims 1 to 14.

28. A computer program product, wherein the computer program product stores instructions, and when the instructions are executed by a computer, the computer is enabled to implement the method according to any one of claims 1 to 14.

[FIG. 1]

| | |
|---|---|
| **Neural network layer 130** | Output layer 140 |
| | Hidden layer n 13n |
| | Hidden layer 2 132 |
| | Hidden layer 1 131 |
| **Convolutional layer/Pooling layer 120** | 126 |
| | 125 |
| | 124 |
| | 123 |
| | 122 |
| | 121 |
| **Input layer 110** | Input layer 110 |

Convolutional neural network (CNN) 100

To-be-processed image

[FIG. 2]

| Output layer 140 |
| Hidden layer n 13n |
| Hidden layer 2 132 |
| Hidden layer 1 131 |

Neural network layer 130

Convolutional neural network (CNN) 100

Convolutional layer/Pooling layer 120

| 126 | 126 | 126 |
| 125 | 125 | 125 |
| 124 | 124 | 124 |
| 123 | 123 | 123 |
| 122 | 122 | 122 |
| 121 | 121 | 121 |

Input layer 110

| Input layer 110 |

To-be-processed image

[FIG. 3]

Input an image

Output an image segmentation result

128 64 64 2

392× 392  390× 390  388× 388  388× 388

572× 572  570× 570  568× 568

128 128

284² 282² 280²

256 256

140² 138² 136²

512 512

68² 66² 64²

32² 30² 28²

1024

56²

1024 512

54² 52²

512 256

104² 102² 100²

256 128

200² 198² 196²

Convolution 3*3, Relu

Concatenation

Maximum pooling 2*2

Upsampling 2*2

Convolution 1*1

EP 4 708 215 A1

[FIG. 4]

[FIG. 5]

EP 4 708 215 A1

[FIG. 6]

| |
|---|
| Obtain a first image and a second image, where the second image and the first image are located in a same image sequence, and the second image is located after the first image |

601

| |
|---|
| Process the first image by using a semantic feature extraction network, to obtain a semantic feature of the first image, where the semantic feature of the first image is used to predict an image segmentation result of the first image |

602

| |
|---|
| Process the semantic feature of the first image and the second image by using a noise reduction network, to obtain a semantic feature of the second image through prediction |

603

| |
|---|
| Perform semantic segmentation processing on the second semantic feature, to obtain an image segmentation result of the second image |

604

[FIG. 7]

```
┌─────────────────────────────────────────────────┐
│        Obtain an image captured in real time     │ ╱ 701
└─────────────────────────────────────────────────┘
                        │
                        ▼
              ◇─────────────────────◇
             Is the image a reference frame?         ╱ 702
              ◇─────────────────────◇
            Yes                       No
```

```
┌──────────────────────────┐        ┌──────────────────────────┐
│   Perform semantic feature│ ╱ 703  │ Predict a semantic feature│ ╱ 705
│   extraction on the image │        │   of the image by using a │
│   by using a semantic     │        │   noise reduction network │
│   feature extraction      │        │   based on the image and a│
│   network, to obtain a    │        │   semantic feature of a   │
│   semantic feature of the │        │   reference frame closest │
│   image                   │        │   to the image            │
└──────────────────────────┘        └──────────────────────────┘
             │                                    │
             ▼                                    ▼
┌──────────────────────────┐        ┌──────────────────────────┐
│ Perform semantic          │ ╱ 704  │ Perform semantic          │ ╱ 706
│ segmentation processing on│        │ segmentation processing on│
│ the semantic feature of   │        │ the semantic feature of   │
│ the image by using a first│        │ the image by using a      │
│ semantic segmentation     │        │ second semantic           │
│ network, to obtain an     │        │ segmentation network, to  │
│ image segmentation result │        │ obtain an image           │
│                           │        │ segmentation result       │
└──────────────────────────┘        └──────────────────────────┘
```

EP 4 708 215 A1

[FIG. 8]

```
Reference ──→ ┌─────────────────┐ ── Semantic feature of the ──→ ┌──────────────┐ ── Image
frame         │ Semantic feature │      reference frame            │ First semantic │   segmentation
              │ extraction       │                                 │ segmentation   │   result of the
              │ network          │                                 │ network        │   reference frame
              └─────────────────┘                                  └──────────────┘
                       │
                       │ Semantic feature of
                       │ the reference frame
                       ↓
Non-reference frame ──→ ┌──────────────┐ ── Semantic feature of the ──→ ┌──────────────┐ ── Image
                        │ Noise         │    non-reference frame         │ Second semantic│   segmentation
                        │ reduction     │                                │ segmentation   │   result of the
                        │ network       │                                │ network        │   non-reference frame
                        └──────────────┘                                 └──────────────┘
```

[FIG. 9]

Obtain a first image and a second image, where the second image and the first image are located in a same image sequence, and the second image is located after the first image — 901

Process the first image by using a semantic feature extraction network, to obtain a first semantic feature, where the first semantic feature is used to predict an image segmentation result of the first image, and the semantic feature extraction network is a trained network — 902

Process the semantic feature of the first image and the second image by using a noise reduction network, to obtain a semantic feature of the second image through prediction — 903

Input the second image to the semantic feature extraction network, to obtain a third semantic feature — 904

Update the noise reduction network based on a loss function value, to obtain an updated noise reduction network, where the loss function value is obtained based on a distance between the second semantic feature and the third semantic feature — 905

[FIG. 10]

User interface

↑ Masked image

Conferencing software

Original image ↑    RGB image ↓    Mask ↑

Image capturing module    Portrait segmentation module

[FIG. 11]

$I_0$ (Reference frame) — Semantic estimation — Detail prediction

$I_1$ — Downsampling — Noise resistance — Detail prediction

$I_2$ — Downsampling — Noise resistance — Detail prediction

$I_3$ (Reference frame) — Semantic estimation — Detail prediction

$I_4$ — Downsampling — Noise resistance — Detail prediction

$I_k$ (Reference frame) — Semantic estimation — Detail prediction

Downsampling

Semantic feature

[FIG. 12]

[FIG. 13]

[FIG. 14]

[FIG. 15]

Image processing apparatus

1501

Obtaining module

1502

Processing module

[FIG. 16]

Model training apparatus

1601

Obtaining module

1602

Processing module

[FIG. 17]

1700

Execution device

Receiver 1701

Transmitter 1702

Processor 1703

Memory 1704

Application processor 17031

Communication processor 17032

[FIG. 18]

Neural-network processing unit 1800

EP 4 708 215 A1

[FIG. 19]

Computer-readable storage medium 1900

Signal-carrying medium 1901

Program instructions 1902

| Computer-readable medium 1903 | Computer-recordable medium 1904 | Communication medium 1905 |

## INTERNATIONAL SEARCH REPORT

| International application No. |
| --- |
| **PCT/CN2024/097402** |

| A. | CLASSIFICATION OF SUBJECT MATTER |
| --- | --- |
| | G06V 10/26(2022.01)i |

According to International Patent Classification (IPC) or to both national classification and IPC

| B. | FIELDS SEARCHED |
| --- | --- |

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 帧, 网络, 模型, 语义, 特征, 分割, 预测, image, frame, network, model, semantic, feature, segmentation, predict

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110569698 A (ALIBABA GROUP HOLDING LTD.) 13 December 2019 (2019-12-13) description, paragraphs 39-60 | 1-28 |
| A | CN 109978893 A (TENCENT TECHNOLOGY (SHENZHEN) CO., LTD.) 05 July 2019 (2019-07-05) entire document | 1-28 |
| A | CN 114187311 A (INGDONG KUNPENG JIANGSU TECHNOLOGY CO., LTD.) 15 March 2022 (2022-03-15) entire document | 1-28 |
| A | US 2022207866 A1 (NEC CORP.) 30 June 2022 (2022-06-30) entire document | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 August 2024** | **22 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/097402**

| Patent document cited in search report | | | Publication date (day/month/year) | Patent family member(s) | | | Publication date (day/month/year) |
|---|---|---|---|---|---|---|---|
| CN | 110569698 | A | 13 December 2019 | None | | | |
| CN | 109978893 | A | 05 July 2019 | KR | 20210073569 | A | 18 June 2021 |
| | | | | JP | 2022505762 | A | 14 January 2022 |
| | | | | EP | 3951713 | A1 | 09 February 2022 |
| | | | | WO | 2020192469 | A1 | 01 October 2020 |
| | | | | US | 2021241107 | A1 | 05 August 2021 |
| CN | 114187311 | A | 15 March 2022 | None | | | |
| US | 2022207866 | A1 | 30 June 2022 | JP | 2022103149 | A | 07 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310701005